# EUROPEAN PATENT APPLICATION

(11) **EP 4 650 244 A1**
(43) Date of publication of application: **19.11.2025**
(21) Application number: 24848199.6
(22) Date of filing: 27.07.2024
(51) Int. Cl.: B60W 50/14, B60W 40/10

(54) **VEHICLE DRIVING INTENTION REPRESENTATION METHOD AND APPARATUS, AND VEHICLE**

(30) Priority: 29.07.2023 CN 202310957043
(71) Applicant: Huawei Technologies Co., Ltd., Shenzhen, Guangdong 518129 (CN)
(72) Inventor: LI, Xiaokang, Shenzhen, Guangdong 518129 (CN); MO, Jieying, Shenzhen, Guangdong 518129 (CN)
(74) Representative: Gill Jennings & Every LLP
(86) International application number: PCT/CN2024/108010
(87) International publication number: WO 2025/026244

(57) **Abstract**

A vehicle driving intention representation method and apparatus, and a vehicle (100) are provided. The method includes: obtaining environment information of the vehicle (201); obtaining intention information of a driving behavior of the vehicle based on the environment information and a vehicle status, where the intention information includes driving purpose information and vehicle control information, the driving purpose information represents a driving decision for the environment information, and the vehicle control information represents traveling information when the vehicle executes the driving decision (202); and displaying a safety mark and a speed mark based on the driving purpose information and the vehicle control information, where the safety mark indicates safe traveling of the vehicle, and the speed mark indicates at least one of accelerated traveling and decelerated traveling of the vehicle (203). Based on these marks, a user may know in advance which driving behavior the vehicle is to be performed in a time range and how the driving behavior is to be performed. This removes a "communication" barrier between an intelligent vehicle and a vehicle owner.

## Description

This application claims priority to Chinese Patent Application No. 202310957043.8, filed with the China National Intellectual Property Administration on July 29, 2023 and entitled "VEHICLE DRIVING INTENTION REPRESENTATION METHOD AND APPARATUS, AND VEHICLE", which is incorporated herein by reference in its entirety.

### TECHNICAL FIELD

This application relates to the field of vehicle technologies, and in particular, to a vehicle driving intention representation method and apparatus, and a vehicle.

### BACKGROUND

With rapid development of combined application of an artificial intelligence technology and vehicles, vehicles equipped with an assisted driving technology and an autonomous driving technology gradually enter the market, and conventional manual driving vehicles gradually develop into vehicles equipped with the assisted driving technology. For a vehicle equipped with assisted driving, a head unit may make decisions based on a plurality of sensors mounted on the vehicle, and generate, based on these decisions, various instructions to control various systems (such as a braking system, an air freshener system, and an air conditioning system) of the head unit.

However, in an assisted driving process of the vehicle, a vehicle behavior decision is automatically completed by the head unit, and a user lacks a way to recognize a driving behavior of the assisted driving vehicle. Consequently, there is a "communication" barrier between the vehicle and the user.

When making a decision, the existing head unit informs the user of an instruction execution result of the vehicle, and prompts the user only with the driving behavior of the decision without more prompts. Consequently, there is a "communication" barrier between an intelligent vehicle and a vehicle owner, which is unfavorable to people's trust in the intelligent vehicle.

### SUMMARY

This application discloses a vehicle driving intention representation method and apparatus, and a vehicle, to improve interaction between the vehicle and a user.

According to a first aspect, an embodiment of this application provides a vehicle driving intention representation method. The method may be applied to a vehicle, and includes: The vehicle obtains environment information of the vehicle. The vehicle obtains intention information of a driving behavior of the vehicle based on the environment information and a vehicle status. The intention information includes driving purpose information and vehicle control information. The driving purpose information represents a driving decision for the environment information. The vehicle control information represents traveling information when the vehicle executes the driving decision. The vehicle then displays a safety mark and a speed mark based on the driving purpose information and the vehicle control information. The safety mark indicates safe traveling of the vehicle. The speed mark indicates at least one of accelerated traveling and decelerated traveling of the vehicle.

It may be understood that the safety mark may represent that traveling time and space corresponding to the safety mark are safe, so that the user does not need to worry about a danger like a collision of the vehicle. The speed mark may enable the user to learn that the vehicle is about to accelerate, decelerate, or the like.

Both the safety mark and the speed mark may be superimposed on a navigation path for display.

In this embodiment of this application, the intention information of the driving behavior of the vehicle is obtained based on the environment information and the vehicle status of the vehicle, and then the safety mark and the speed mark are displayed based on the driving purpose information and the vehicle control information. Based on the display of the safety mark and the speed mark, the user may know in advance which driving behavior the vehicle is to be performed in a time range and how the driving behavior is to be performed. This removes a "communication" barrier between an intelligent vehicle and a vehicle owner, and improves user's trust in the intelligent.

In a possible implementation, an end point of the speed mark is related to a start point of the safety mark.

The relation may be, for example: (1) The end point of the speed mark is the start point of the safety mark; (2) There is a distance between the end point of the speed mark and the start point of the safety mark and the speed mark does not overlap the safety mark; or (3) The end point of the speed mark is located after the start point of the safety mark and the speed mark overlaps the safety mark.

The case (1) in which the end point of the speed mark is the start point of the safety mark may be applied to a vehicle deceleration and following scenario. For example, the vehicle first decelerates, and the end point of the speed mark is W1. After the deceleration ends, the vehicle follows the preceding vehicle, and the start point of the safety mark is W2. In this scenario, the end point W1 of the speed mark is the start point W2 of the safety mark.

It may be understood that the start point and the end point in embodiments of this solution not only refer to a point, but also may be a spatial-temporal orientation of the point. To be specific, the end point of the speed mark and the start point of the safety mark are on a same straight line perpendicular to a navigation direction.

The case (2) in which there is a distance between the end point of the speed mark and the start point of the safety mark and the speed mark does not overlap the safety mark may be applied to a scenario in which there is a dangerous vehicle or a vehicle traveling on a lane on a side. For example, an ego vehicle completes deceleration before entering a parallel area of the vehicle driving on the lane, and the end point of the speed mark is W3. After the deceleration ends, the ego vehicle slowly passes the area, and the start point W4 of the safety mark is a nearest end between a preceding vehicle and the ego vehicle. In this scenario, there is a distance between the end point W3 of the speed mark and the start point W4 of the safety mark.

The case (3) in which the end point of the speed mark is located after the start point of the safety mark and the speed mark overlaps the safety mark may be applied to a scenario in which a vehicle gives way to a pedestrian in a process of entering an intersection. For example, the ego vehicle first enters the intersection, and the start point W5 of the safety mark is a nearest end between the intersection and the ego vehicle. In a process in which the ego vehicle passes the intersection, the ego vehicle decelerates to give way to a pedestrian at the intersection, and the end point of the speed mark is W6. In this scenario, the end point W6 of the speed mark is located after the start point W5 of the safety mark.

Certainly, there may be another related case between the speed mark and the safety mark. This is not limited in this solution.

In a possible implementation, the safety mark includes a time distance mark. The time distance mark is N parallel short lines with an equal spacing between an obstacle and the vehicle, and N is an integer not less than 2.

Based on the time distance mark, the user can trust the driving behavior of the vehicle.

In another possible implementation, the safety mark includes a mark of a relative location relationship between the obstacle and the vehicle. The relative location relationship mark is a short line or an arc between a navigation path of the vehicle and the obstacle.

The relative location relationship may include a parallel relationship and a cross relationship. The parallel relationship may be understood as that the ego vehicle and another vehicle travel in different lanes (the ego vehicle and the another vehicle may travel in a same direction or in a reverse direction), and the ego vehicle may pass the another vehicle. That the ego vehicle passes the another vehicle, for example, may be that the ego vehicle passes the preceding vehicle from a left side or a right side, or may be that the ego vehicle passes the preceding vehicle from a same direction or a reverse direction. In this case, the two vehicles may travel close to each other. In other words, there is a parallel relationship between the two vehicles. A mark corresponding to the parallel relationship may be a short line that is parallel to the navigation path of the ego vehicle and that is displayed in a direction in which the obstacle is adjacent to the ego vehicle, and may be displaying a parallel short line parallel to the navigation path and near the preceding vehicle when the ego vehicle travels in an adjacent lane of the preceding vehicle. The short line is parallel to the navigation direction of the vehicle.

The cross relationship may be understood as that the ego vehicle is to overtake the preceding vehicle. It may be that the ego vehicle overtakes the preceding vehicle from a rear right side, or the ego vehicle overtakes the preceding vehicle from a rear left side. A mark corresponding to the cross relationship may be a cross identifier, for example, an arc, displayed near the obstacle in a direction in which the obstacle is adjacent to the ego vehicle.

Based on the relative location relationship mark, the user can learn that the vehicle can safely pass the area.

In still another possible implementation, the safety mark includes highlighting an intersection area on the navigation path.

For example, in an intersection scenario, a highlighted area (an arc area) is additionally displayed on a path that is on the navigation path and that corresponds to the intersection area and that exceeds a display area of the path, so that the user can rest assured that a road section can be passed safely. Certainly, another shape may be set, for example, a rectangular area or a circular area.

It may be understood that the safety mark is merely an example, and is not specifically limited. For example, the time distance mark may be highlighting an area between the obstacle and the vehicle. For another example, the relative location relationship mark may be a highlighted area or parallel short lines.

In a possible implementation, the speed mark includes continuous fold lines or arcs; and a convex direction of the fold lines or arcs towards a direction of the vehicle indicates decelerated traveling of the vehicle, and a convex direction of the fold lines or arcs towards the navigation direction of the vehicle indicates accelerated traveling of the vehicle.

Certainly, the speed mark may alternatively be another visual element, for example, an arrow. Based on the display, the user knows a time range in which the vehicle accelerates or decelerates.

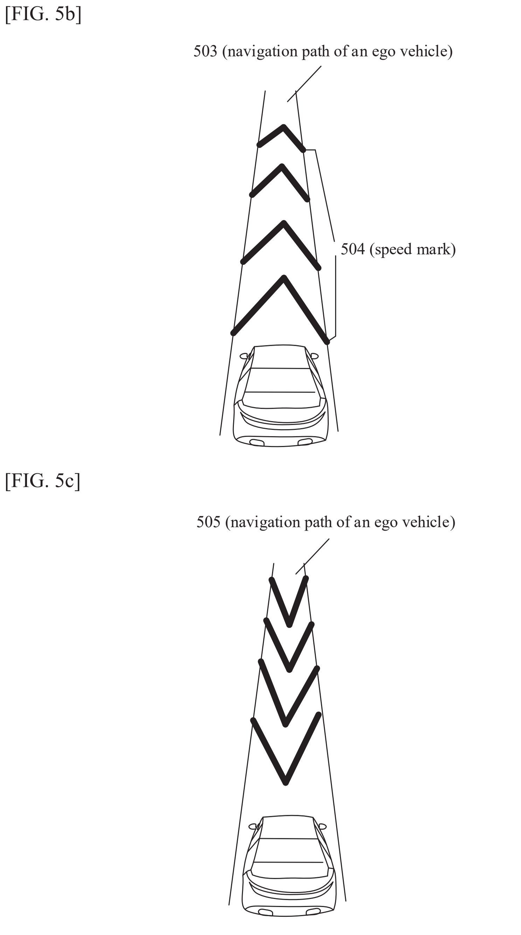

Preferably, an angle of the fold lines or arcs indicates a change amplitude of the acceleration or deceleration. For example, a smaller angle of the fold lines (arcs) indicates a larger change amplitude of the speed, as shown in FIG. 5c. A larger angle of the fold lines (arcs) indicates a smaller change amplitude.

In this way, more flexible display can be performed, so that the user can intuitively learn of a speed change status.

In a possible implementation, the vehicle further displays a driving behavior change start point and a driving behavior change end point based on the driving purpose information and the vehicle control information.

The driving behavior change start point indicates an orientation corresponding to earliest change time in time corresponding to speed change information and time corresponding to direction change information of the vehicle. For example, if the time corresponding to the speed change information of the vehicle is earlier than the time corresponding to the direction change information, the driving behavior change start point indicates an orientation corresponding to the time corresponding to the speed change information of the vehicle.

The driving behavior change end point indicates an orientation corresponding to latest change end time in time corresponding to the speed change information and time corresponding to the direction change information of the vehicle.

For example, if the end time corresponding to the direction change information of the vehicle is later than the end time corresponding to the speed change information, the driving behavior change end point indicates an orientation corresponding to the end time corresponding to the direction change information of the vehicle.

Based on the display of the driving behavior change start point and the driving behavior change end point, the user can know in advance where the vehicle starts to change a motion and where the vehicle ends the change.

In a possible implementation, the vehicle further displays a braking mark based on the driving purpose information and the vehicle control information. The braking mark is at least one of a visual element perpendicular to a traveling direction, a visual element whose color deepens/lightens from left to right continuously and changes periodically, or a visual element that changes from large to small or from present to disappeared.

The braking mark is displayed, so that the user knows where to brake.

In a possible implementation, the vehicle further displays a waiting mark based on the driving purpose information and the vehicle control information. The waiting mark is at least one of a visual element perpendicular to a traveling direction, a visual element whose color deepens/lightens from left to right continuously and changes periodically, or a visual element that changes from large to small or from present to disappeared.

The waiting mark is displayed, so that the user knows where to wait.

In a possible implementation, the vehicle further displays a waiting countdown mark based on the driving purpose information and the vehicle control information. The waiting countdown mark is at least one of a visual element perpendicular to a traveling direction, a visual element whose color deepens/lightens from left to right continuously and changes periodically, or a visual element that changes from large to small or from present to disappeared. Certainly, the waiting countdown mark may alternatively be a number or the like. This is not limited in this solution.

The waiting countdown mark is displayed, so that the user knows when the vehicle waiting ends.

In a possible implementation, the vehicle further displays a vehicle following status change mark based on the driving purpose information and the vehicle control information. The vehicle following status change mark is that the navigation path changes from thin to thick or from thick to thin.

The change from thin to thick indicates to decelerate to follow a preceding vehicle. The change from thick to thin indicates to accelerate to follow a preceding vehicle. It may be understood that if a width of the navigation path does not change, it indicates to travel at a constant speed to follow a preceding vehicle.

Based on the vehicle following status change mark, the user knows a change status of a vehicle speed in a vehicle following state.

In a possible implementation, the vehicle further displays a target component. The target component is a text and/or an icon. The target component represents the environment information. In other words, the target component displays a cause for a driving decision.

Based on the display of the environment information, the user knows why the vehicle makes a corresponding driving decision, thereby enhancing trust between the user and the vehicle.

In a possible implementation, the vehicle further displays first text content. The first text content includes a first text and a second text. The first text indicates that a behavior corresponding to the vehicle control information is to be performed. The second text indicates the behavior. The vehicle displays second text content when the vehicle starts to perform the behavior. The second text content includes the second text.

Certainly, the second text content may further include a third text, and the third text indicates that the vehicle is performing the behavior. This is not limited in this solution.

Based on the display of the text, the user learns more intuitively about a behavior to be performed or a behavior being performed by the vehicle.

In another possible implementation, the vehicle further displays first text content. The first text content includes a first text, a second text, and a third text. The first text indicates that at least two consecutive behaviors corresponding to the vehicle control information are to be performed. The second text indicates a first behavior in the at least two consecutive behaviors. The third text indicates a second behavior in the at least two consecutive behaviors. The vehicle displays second text content when the vehicle starts to perform the first behavior. The second text content includes the second text and the third text. Display strength of the second text is higher than that of the third text. The vehicle displays third text content when the vehicle starts to perform the second behavior. The third text content includes the third text.

The display strength may be, for example, a large display font and/or a dark color. Certainly, there may alternatively be another design. This is not limited in this solution.

Based on the display of the text, the user learns more intuitively about a behavior to be performed or a behavior being performed by the vehicle.

In a possible implementation, the vehicle further determines the first text, the second text, the third text, and display occasions of the first text, the second text, and the third text based on at least one of the driving decision, the vehicle status, and the vehicle control information.

For example, the vehicle obtains a speed change timestamp, a direction change timestamp, an acceleration timestamp, an acceleration, a speed, a steering angle, a sensed signal, a MOP path, and the like. Then, the obtained information is decomposed into a tense and semantic content. Based on this, the semantic content of text display may be obtained for display.

In a possible implementation, the vehicle further displays the driving behavior change start point and the driving behavior change end point on the navigation path. The driving behavior change start point indicates the orientation corresponding to the earliest change time in the time corresponding to the speed change information and the time corresponding to the direction change information of the vehicle, and the driving behavior change end point indicates the orientation corresponding to the latest change end time in the time corresponding to the speed change information and the time corresponding to the direction change information of the vehicle. The vehicle displays the continuous fold lines between the driving behavior change start point and the driving behavior change end point on the navigation path, where the convex direction of the fold lines towards the direction of the vehicle indicates decelerated traveling of the vehicle. The vehicle displays the time distance mark on a part that is on the navigation path and that is after the driving behavior change end point, where the time distance mark is the N parallel short lines with the equal spacing between the obstacle and the vehicle, and N is an integer not less than 2.

This example corresponds to a vehicle deceleration and following scenario, so that the user can know where the vehicle starts the behavior change, where the vehicle ends the behavior change, where the vehicle decelerates, and where the vehicle follows the preceding vehicle safely.

In a possible implementation, the vehicle further plays a target voice. The target voice is obtained based on the intention information.

In addition to various marks, components, and text display, the user may be further prompted with reference to a voice prompt. This removes a "communication" barrier between an intelligent vehicle and a vehicle owner, and improves user's trust in the intelligent vehicle.

According to a second aspect, an embodiment of this application provides a vehicle driving intention representation apparatus. The apparatus includes: an obtaining module, configured to obtain environment information of the vehicle; a processing module, configured to obtain intention information of a driving behavior of the vehicle based on the environment information and a vehicle status, where the intention information includes driving purpose information and vehicle control information, the driving purpose information represents a driving decision for the environment information, and the vehicle control information represents traveling information when the vehicle executes the driving decision; and a display module, configured to display a safety mark and a speed mark based on the driving purpose information and the vehicle control information, where the safety mark indicates safe traveling of the vehicle, and the speed mark indicates at least one of accelerated traveling and decelerated traveling of the vehicle.

In a possible implementation, an end point of the speed mark is related to a start point of the safety mark.

In a possible implementation, the safety mark includes a time distance mark, the time distance mark is N parallel short lines with an equal spacing between an obstacle and the vehicle, and N is an integer not less than 2.

In another possible implementation, the safety mark includes a mark of a relative location relationship between the obstacle and the vehicle, the relative location relationship mark is a short line or an arc between a navigation path of the vehicle and the obstacle, and the short line is parallel to a navigation direction of the vehicle.

In still another possible implementation, the safety mark includes highlighting an intersection area on the navigation path.

In a possible implementation, the speed mark includes continuous fold lines or arcs; and a convex direction of the fold lines or arcs towards a direction of the vehicle indicates decelerated traveling of the vehicle, and a convex direction of the fold lines or arcs towards the navigation direction of the vehicle indicates accelerated traveling of the vehicle, where an angle of the fold lines or arcs indicates a change amplitude of the acceleration or deceleration.

In a possible implementation, the display module is further configured to: display a driving behavior change start point and a driving behavior change end point based on the driving purpose information and the vehicle control information. The driving behavior change start point indicates an orientation corresponding to earliest change time in time corresponding to speed change information and time corresponding to direction change information of the vehicle. The driving behavior change end point indicates an orientation corresponding to latest change end time in time corresponding to the speed change information and time corresponding to the direction change information of the vehicle.

In a possible implementation, the display module is further configured to: display one or more of a braking mark, a waiting mark, or a waiting countdown mark based on the driving purpose information and the vehicle control information, where the braking mark, the waiting mark, or the waiting countdown mark is at least one of a visual element perpendicular to a traveling direction, a visual element whose color deepens/lightens from left to right continuously and changes periodically, or a visual element that changes from large to small or from present to disappeared.

In a possible implementation, the display module is further configured to: display a vehicle following status change mark based on the driving purpose information and the vehicle control information, where the vehicle following status change mark is that the navigation path changes from thin to thick or from thick to thin, the change from thin to thick indicates to decelerate to follow a preceding vehicle, and the change from thick to thin indicates to accelerate to follow a preceding vehicle.

In a possible implementation, the display module is further configured to: display a target component, where the target component is a text and/or an icon, and the target component represents the environment information.

In a possible implementation, the display module is further configured to: display first text content, where the first text content includes a first text and a second text, the first text indicates that a behavior corresponding to the vehicle control information is to be performed, and the second text indicates the behavior; and display second text content when the vehicle starts to perform the behavior, where the second text content includes the second text.

In a possible implementation, the display module is further configured to: display first text content, where the first text content includes a first text, a second text, and a third text, the first text indicates that at least two consecutive behaviors corresponding to the vehicle control information are to be performed, the second text indicates a first behavior in the at least two consecutive behaviors, and the third text indicates a second behavior in the at least two consecutive behaviors; display second text content when the vehicle starts to perform the first behavior, where the second text content includes the second text and the third text, and display strength of the second text is higher than that of the third text; and display third text content when the vehicle starts to perform the second behavior, where the third text content includes the third text.

In a possible implementation, the display module is further configured to: determine the first text, the second text, the third text, and display occasions of the first text, the second text, and the third text based on at least one of the driving decision, the vehicle status, and the vehicle control information.

In a possible implementation, the display module is further configured to: display the driving behavior change start point and the driving behavior change end point on the navigation path, where the driving behavior change start point indicates the orientation corresponding to the earliest change time in the time corresponding to the speed change information and the time corresponding to the direction change information of the vehicle, and the driving behavior change end point indicates the orientation corresponding to the latest change end time in the time corresponding to the speed change information and the time corresponding to the direction change information of the vehicle; display the continuous fold lines between the driving behavior change start point and the driving behavior change end point on the navigation path, where the convex direction of the fold lines towards the direction of the vehicle indicates decelerated traveling of the vehicle; and display the time distance mark on a part that is on the navigation path and that is after the driving behavior change end point, where the time distance mark is the N parallel short lines with the equal spacing between the obstacle and the vehicle, and N is an integer not less than 2.

In a possible implementation, the display module is further configured to: play a target voice, where the target voice is obtained based on the intention information.

According to a third aspect, this application provides a vehicle driving intention representation apparatus, including at least one processor and a memory. The at least one processor executes a program or instructions stored in the memory, to enable the vehicle driving intention representation apparatus to implement the method according to any one of the possible implementations of the first aspect.

According to a fourth aspect, this application provides a computer-readable storage medium, configured to store a computer program. When the computer program is run on a computer or a processor, the computer or the processor is enabled to implement the method according to any one of the possible implementations of the first aspect.

According to a fifth aspect, this application provides a computer program product, where the computer program product includes instructions, and when the instructions are run on a computer or a processor, the computer or the processor is enabled to implement the method according to any one of the possible implementations of the first aspect.

According to a sixth aspect, this application provides a chip, including at least one processor and a memory. The at least one processor executes a program or instructions stored in the memory, to implement the method according to any one of the possible implementations of the first aspect.

According to a seventh aspect, this application provides a vehicle, where the vehicle includes the apparatus according to any one of the possible implementations of the second aspect.

It may be understood that the apparatus according to the second aspect, the apparatus according to the third aspect, the computer-readable storage medium according to the fourth aspect or the computer program product according to the fifth aspect, the chip according to the sixth aspect, and the vehicle according to the seventh aspect are all configured to perform the method according to any one of the possible implementations of the first aspect. Therefore, for beneficial effects that can be achieved by the apparatus according to the second aspect, the apparatus according to the third aspect, the computer-readable storage medium according to the fourth aspect or the computer program product according to the fifth aspect, the chip according to the sixth aspect, and the vehicle according to the seventh aspect, refer to the beneficial effects in the corresponding method. Details are not described herein again.

### BRIEF DESCRIPTION OF DRAWINGS

The following describes the accompanying drawings used in embodiments of this application.
FIG. 1 is a functional block diagram of a vehicle according to an embodiment of this application;
FIG. 2 is a schematic flowchart of a vehicle driving intention representation method according to an embodiment of this application;
FIG. 3a is a diagram of environment information according to an embodiment of this application;
FIG. 3b is a diagram of driving purpose information according to an embodiment of this application;
FIG. 3c is a diagram of vehicle control information according to an embodiment of this application;
FIG. 4a is a diagram of a time distance mark according to an embodiment of this application;
FIG. 4b is a diagram of a mark of a parallel relationship between an obstacle and a vehicle according to an embodiment of this application;
FIG. 4c is a diagram of a mark of a cross relationship between an obstacle and a vehicle according to an embodiment of this application;
FIG. 4d is a diagram of highlighting an intersection area according to an embodiment of this application;
FIG. 4e is a diagram of highlighting another intersection area according to an embodiment of this application;
FIG. 5a is a diagram of a speed mark according to an embodiment of this application;
FIG. 5b is a diagram of another speed mark according to an embodiment of this application;
FIG. 5c is a diagram of another speed mark according to an embodiment of this application;
FIG. 5d is a diagram of another speed mark according to an embodiment of this application;
FIG. 5e is a schematic flowchart of a rendering processing method for a speed mark according to an embodiment of this application;
FIG. 5f is a diagram of an application scenario of a safety mark and a speed mark according to an embodiment of this application;
FIG. 5g is a diagram of another application scenario of a safety mark and a speed mark according to an embodiment of this application;
FIG. 5h is a diagram of still another application scenario of a safety mark and a speed mark according to an embodiment of this application;
FIG. 6a is a diagram of a driving behavior change start point according to an embodiment of this application;
FIG. 6b is a schematic flowchart of a rendering processing method for a driving behavior change start point according to an embodiment of this application;
FIG. 7a is a diagram of a vehicle following status change mark according to an embodiment of this application;
FIG. 7b is a diagram of another vehicle following status change mark according to an embodiment of this application;
FIG. 7c is a diagram of still another vehicle following status change mark according to an embodiment of this application;
FIG. 7d is a schematic flowchart of a rendering processing method for a vehicle following status change mark in a vehicle following scenario according to an embodiment of this application;
FIG. 7e is a diagram of a time distance relationship according to an embodiment of this application;
FIG. 8a is a diagram of a change process of a braking mark according to an embodiment of this application;
FIG. 8b is a diagram of a waiting mark according to an embodiment of this application;
FIG. 8c is a diagram of a waiting countdown mark according to an embodiment of this application;
FIG. 9a to FIG. 9d each are a diagram of a target component according to an embodiment of this application;
FIG. 10a is a schematic flowchart of a method for obtaining semantic content displayed by a text according to an embodiment of this application;
FIG. 10b is a schematic diagram of semantic content included in environment information D(C), driving purpose information D(B), and vehicle control information D(A) according to an embodiment of this application;
FIG. 10c is a diagram of text display according to an embodiment of this application;
FIG. 10d is a diagram of text display in a vehicle deceleration and following scenario according to an embodiment of this application;
FIG. 11A and FIG. 11B each are a diagram of intention expression of a vehicle deceleration and following scenario according to an embodiment of this application;
FIG. 12 is a diagram of intention expression of a waiting-for-overtaking scenario according to an embodiment of this application;
FIG. 13 is a diagram of a structure of a vehicle driving intention representation apparatus according to an embodiment of this application; and
FIG. 14 is a diagram of a hardware structure of another vehicle driving intention representation apparatus according to an embodiment of this application.

### DESCRIPTION OF EMBODIMENTS

The following clearly and completely describes technical solutions of embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of embodiments of this application.

The term "and/or" in this specification describes only an association relationship for associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in descriptions of embodiments of this application, terms such as "example" or "for example" are used to represent giving an example, an illustration, or a description. Any embodiment or design solution described as "example" or "for example" in embodiments of this application should not be construed as being more preferential or advantageous than other embodiments or design solutions. Exactly, use of the terms such as "example" or "for example" is intended to present a related concept in a specific manner.

First, terms used in embodiments of this application are explained and described.

An automated driving system (automated driving system, ADS) is a system including hardware and software that can continuously execute all dynamic driving tasks.

A cockpit domain controller (Cockpit Domain Controller, CDC) is one of three domain controllers in a future automotive architecture, and integrates functions of a conventional entertainment system (head unit), instrument, and air conditioner controller in the human-machine interaction field in a cockpit.

A mobile data center (Mobile Data Center, MDC) is one of three domain controllers in a future automotive architecture, and mainly provides intelligent driving services. A core of the mobile data center is to process a large amount of raw data detected by front-end sensors, and send control instructions to a back-end vehicle control domain after sensing, fusion, and planning.

A motion planner (motion planner, MoP) is responsible for planning an expected trajectory and speed.

Navigation cruise assist (navigation cruise assist, NCA) is an intelligent autonomous driving technology. In an area in which the navigation cruise assist is allowed to be enabled, after a driver activates this function, a vehicle can flexibly adjust a vehicle speed and a traveling route based on a navigation setting route and a real-time traffic status of an actual road, and automatically travel to a destination.

Automated parking assist (automated parking assist, APA) is an intelligent autonomous driving technology. When a vehicle cruises at a low speed, the APA technology may sense an ambient environment by using sensors (such as an ultrasonic radar or a camera) on the vehicle, help a driver find an empty parking space of an appropriate size, and automatically drive the vehicle to the found empty parking space.

Automated valet parking (automated valet parking, AVP) is an intelligent autonomous driving technology. By using the AVP technology, a vehicle can enter a completely unfamiliar parking lot independently, and can complete all parking actions without learning first, and a driver is not required to be in the vehicle. The AVP technology can replace a conventional manual parking service, helping users save a large amount of parking time and solve a pain point of queuing and parking during peak hours.

Lane centering control (lane centering control, LCC) is an intelligent autonomous driving technology. The LCC technology can be used to monitor a relative location between a vehicle and a lane line in real time and continuously and automatically control a lateral movement of the vehicle, so that the vehicle always travels in a center of a lane.

For an intelligent vehicle equipped with assisted driving, a head unit may make decisions based on a plurality of sensors mounted on the vehicle, and generate, based on these decisions, various instructions to control various systems (such as a braking system, an air freshener system, and an air conditioning system) of the head unit.

In an assisted driving process of the vehicle, a vehicle behavior decision is automatically completed by the head unit, and a user lacks a way to recognize the driving behavior of the assisted driving vehicle. Consequently, there is a "communication" barrier between the vehicle and the user.

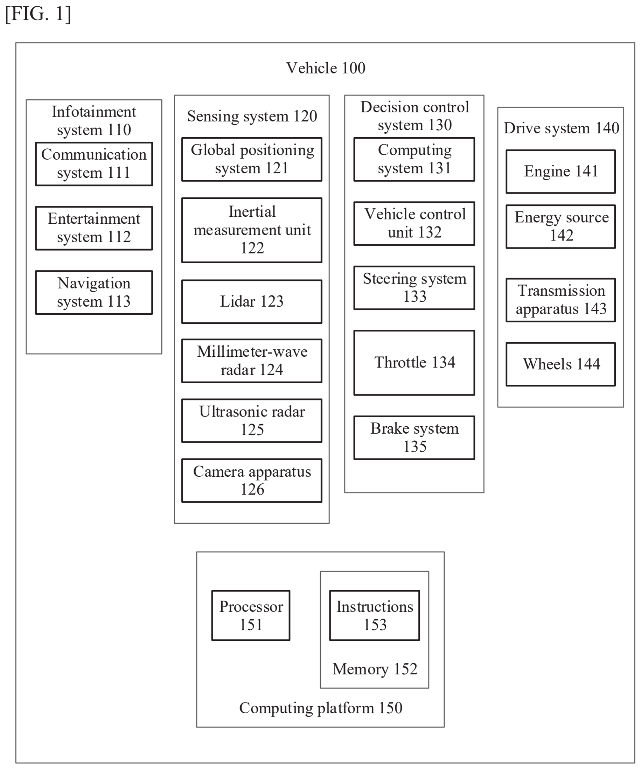

Therefore, an embodiment of this application provides a vehicle driving intention representation method and apparatus. The method may be applied to a vehicle. FIG. 1 is a functional block diagram of a vehicle 100 according to an embodiment of this application. As shown in FIG. 1, the vehicle 100 may include various subsystems, such as an infotainment system 110, a sensing system 120, a decision control system 130, a drive system 140, and a computing platform 150. Optionally, the vehicle 100 may include more or fewer subsystems, and each subsystem may include a plurality of components. In addition, all subsystems and components of the vehicle 100 may be interconnected in a wired or wireless manner.

In some embodiments, the infotainment system 110 may include a communication system 111, an entertainment system 112, and a navigation system 113.

The communication system 111 may include a wireless communication system, and the wireless communication system may communicate with one or more devices in wireless manner directly or by using a communication network. For example, the wireless communication system may use 3G cellular communication, such as CDMA, EVD0, a GSM/GPRS. The wireless communication system may use 4G cellular communication, such as LTE, or perform communication through a 5G cellular network. The wireless communication system may communicate with a wireless local area network (wireless local area network, WLAN) through Wi-Fi. In some embodiments, the wireless communication system may directly communicate with a device through an infrared link, Bluetooth, or ZigBee. Other wireless protocols, for example, various vehicle communication systems, such as the wireless communication system, may include one or more dedicated short range communications (dedicated short range communications, DSRC) devices, and these devices may include public and/or private data communication between the vehicle and/or roadside stations.

The entertainment system 112 may include a display device, a microphone, and a speaker. A user may listen to broadcast and play music in a vehicle based on the entertainment system. Alternatively, a mobile phone may be connected to the vehicle, and projection of the mobile phone is implemented on the display device. The display device may be of a touch type, and the user may perform an operation by touching a screen.

Optionally, the display device may be an actual display device, for example, a central control screen, or may be a display device formed by projecting an object by using a projection technology. For example, projection is performed on a front windshield of a vehicle by using a holographic projection technology or a head-up display (Head Up Display, HUD) technology, where a projection area on the front windshield is used as the display device. A type of the display device is not limited in this application.

In some cases, a voice signal of a user may be obtained by using a microphone, and some control performed by the user on the vehicle 100 is implemented based on analysis of the voice signal of the user, for example, a temperature inside the vehicle is adjusted. In other cases, music may be played to the user by using a speaker.

The navigation system 113 may include a map service provided by a map provider, to provide navigation of a traveling route for the vehicle 100, and the navigation system 113 may be used together with a global positioning system 121 and an inertial measurement unit 122 of the vehicle. The map service provided by the map provider may be a two-dimensional map or a high-definition map.

The sensing system 120 may include several types of sensors that sense information about an ambient environment of the vehicle 100. For example, the sensing system 120 may include the global positioning system 121 (the global positioning system may be a GPS system, or may be a BeiDou system or another positioning system), the inertial measurement unit (inertial measurement unit, IMU) 122, a lidar 123, a millimeter-wave radar 124, an ultrasonic radar 125, and a camera apparatus 126. The sensing system 120 may further include sensors (such as an in-vehicle air quality monitor, a fuel gauge, and an oil temperature gauge) of an internal system of the monitored vehicle 100. Sensor data from one or more of these sensors may be used to detect an object and corresponding characteristics (a position, a shape, a direction, a speed, and the like) of the object. Such detection and recognition are key functions of safe operation of the vehicle 100.

The global positioning system 121 may be configured to estimate a geographical location of the vehicle 100.

The inertial measurement unit 122 is configured to sense a location and an orientation change of the vehicle 100 based on an inertial acceleration. In some embodiments, the inertial measurement unit 122 may be a combination of an accelerometer and a gyroscope.

The lidar 123 may sense, by using a laser, an object in an environment in which the vehicle 100 is located. In some embodiments, the lidar 123 may include one or more laser sources, a laser scanner, one or more detectors, and another system component.

The millimeter-wave radar 124 may sense an object in an ambient environment of the vehicle 100 by using a radio signal. In some embodiments, in addition to sensing the object, the millimeter-wave radar 124 may be further configured to sense a speed and/or a moving direction of the object.

The ultrasonic radar 125 may sense an object around the vehicle 100 by using an ultrasonic signal.

The camera apparatus 126 may be configured to capture image information of the ambient environment of the vehicle 100. The camera apparatus 126 may include a monocular camera, a binocular camera, a structured light camera, a panoramic camera, and the like. The image information obtained by the camera apparatus 126 may include a static image, and may further include video stream information.

The decision control system 130 includes a computing system 131 that performs analysis and decision-making based on information obtained by the sensing system 120. The decision control system 130 further includes a vehicle control unit 132 that controls a power system of the vehicle 100, and a steering system 133, a throttle 134, and a brake system 135 that are configured to control the vehicle 100.

The computing system 131 may be operated to process and analyze various information obtained by the sensing system 120 to recognize a target, an object, and/or a feature in the ambient environment of the vehicle 100. The target may include a pedestrian or an animal, and the object and/or the feature may include a traffic signal, a road boundary, and an obstacle. The computing system 131 may use technologies such as an object recognition algorithm, a structure from motion (Structure from Motion, SFM) algorithm, and video tracking. In some embodiments, the computing system 131 may be configured to: draw a map for an environment, track an object, estimate a speed of the object, and the like. The computing system 131 may analyze the various obtained information and obtain a control strategy for the vehicle.

The vehicle control unit 132 may be configured to coordinate and control a power battery and an engine 141 of the vehicle, to improve power performance of the vehicle 100.

The steering system 133 may be operated to adjust a moving direction of the vehicle 100. For example, in an embodiment, the steering system 133 may be a steering wheel system.

The throttle 134 is configured to control an operating speed of the engine 141 and further control a speed of the vehicle 100.

The brake system 135 is configured to control the vehicle 100 to decelerate. The brake system 135 may use friction to slow wheels 144. In some embodiments, the brake system 135 may convert kinetic energy of the wheels 144 into a current. The brake system 135 may alternatively reduce a rotational speed of the wheels 144 in another manner, to control the speed of the vehicle 100.

The drive system 140 may include a component that provides power for the vehicle 100 to move. In an embodiment, the drive system 140 may include an engine 141, an energy source 142, a transmission apparatus 143, and wheels 144. The engine 141 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 141 converts the energy source 142 into mechanical energy.

Examples of the energy source 142 include gasoline, diesel, another petroleum-based fuel, propane, another compressed gas-based fuel, anhydrous alcohol, a solar panel, a battery, and another power source. The energy source 142 may also provide energy for another system of the vehicle 100.

The transmission apparatus 143 may transmit mechanical power from the engine 141 to the wheels 144. The transmission apparatus 143 may include a gearbox, a differential, and a drive shaft. In an embodiment, the transmission apparatus 143 may further include another component, for example, a clutch. The drive shaft may include one or more shafts that may be coupled to one or more wheels 144.

Some or all functions of the vehicle 100 are controlled by the computing platform 150. The computing platform 150 may include at least one processor 151. The processor 151 may execute instructions 153 stored in a non-transitory computer-readable medium such as a memory 152. In some embodiments, the computing platform 150 may alternatively be a plurality of computing devices that control individual components or subsystems of the vehicle 100 in a distributed manner.

The processor 151 may be any conventional processor, for example, a commercially available CPU. Alternatively, the processor 151 may further include a graphics processing unit (Graphic Processing Unit, GPU), a field programmable gate array (Field Programmable Gate Array, FPGA), a system-on-a-chip (System-on-a-Chip, SOC), an application-specific integrated circuit (Application-specific Integrated Circuit, ASIC), or a combination thereof. Although FIG. 1 functionally illustrates the processor, the memory, and other elements of a computer 110 in a same block, a person of ordinary skill in the art should understand that the processor, the computer, or the memory may actually include a plurality of processors, computers, or memories that may or may not be stored in a same physical housing. For example, the memory may be a hard disk drive, or another storage medium located in a housing different from that of the computer 110. Thus, it is understood that a reference to the processor or the computer includes a reference to a set of processors or computers or memories that may or may not operate in parallel. Different from using a single processor to perform the steps described herein, some components, such as a steering component and a deceleration component, each may include a respective processor that performs only computation related to a component-specific function.

In various aspects described herein, the processor may be located far away from the vehicle and communicate wirelessly with the vehicle. In another aspect, some processes described herein are performed on a processor disposed inside the vehicle, while others are performed by a remote processor, including taking steps necessary for single manipulation.

In some embodiments, the memory 152 may include the instructions 153 (for example, program logic), and the instructions 153 may be executed by the processor 151 to perform various functions of the vehicle 100. The memory 152 may also include additional instructions, including instructions used to send data to, receive data from, interact with, and/or control one or more of the infotainment system 110, the sensing system 120, the decision control system 130, and the drive system 140.

In addition to the instructions 153, the memory 152 may further store data, such as a road map, route information, a location, a direction, a speed, and other such vehicle data of a vehicle, and other information. Such information may be used by the vehicle 100 and the computing platform 150 when the vehicle 100 operates in an autonomous mode, a semi-autonomous mode, and/or a manual mode.

The computing platform 150 may control functions of the vehicle 100 based on inputs received from various subsystems (for example, the drive system 140, the sensing system 120, and the decision control system 130). For example, the computing platform 150 may use an input from the decision control system 130 to control the steering system 133 to avoid an obstacle detected by the sensing system 120. In some embodiments, the computing platform 150 may be operated to provide control over many aspects of the vehicle 100 and the subsystems of the vehicle 100.

Optionally, one or more of the foregoing components may be installed separately from or associated with the vehicle 100. For example, the memory 152 may be partially or completely separated from the vehicle 100. The foregoing components may be communicatively coupled together in a wired and/or wireless manner.

Optionally, the foregoing components are merely examples. In actual application, components in the foregoing modules may be added or deleted based on an actual requirement. FIG. 1 should not be understood as any limitation on embodiments of the present invention.

An autonomous vehicle traveling on a road, such as the vehicle 100, may identify an object in an ambient environment of the vehicle 100 to determine to adjust a current speed. The object may be another vehicle, a traffic control device, or an object of another type. In some examples, the autonomous vehicle may independently consider each identified object, and may determine a to-be-adjusted speed of the autonomous vehicle based on characteristics of each identified object, such as a current speed of the object, acceleration of the object, and a distance between the object and the autonomous vehicle.

Optionally, the vehicle 100 or a sensing and computing device (for example, the computing system 131, the computing platform 150) associated with the vehicle 100 may predict a behavior of the recognized object based on a feature of the recognized object and a state (for example, traffic, rain, and ice on a road) of the ambient environment. Optionally, each of the identified objects depends on behavior of each other, and therefore all the identified objects may be considered together to predict behavior of a single identified object. The vehicle 100 can adjust the speed of the vehicle 100 based on the predicted behavior of the identified object. In other words, the autonomous vehicle can determine, based on the predicted behavior of the object, a stable state to which the vehicle needs to be adjusted (for example, acceleration, deceleration, or stop). In this process, another factor, for example, a transverse location of the vehicle 100 on a road on which the vehicle 100 travels, a curvature of the road, or proximity between static and dynamic objects, may also be considered, to determine the speed of the vehicle 100.

In addition to an instruction for adjusting the speed of the autonomous vehicle, the computing device may further provide an instruction for modifying a steering angle of the vehicle 100, so that the autonomous vehicle can follow a given track and/or maintain a safe horizontal distance and a safe vertical distance from an object (for example, a car on a neighboring lane of the road) near the autonomous vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in embodiments of the present invention.

The foregoing describes the architectures in embodiments of this application. The following describes methods in embodiments of this application in detail.

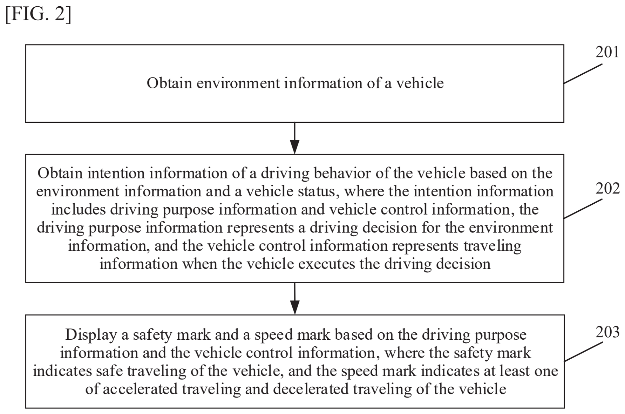

FIG. 2 is a schematic flowchart of a vehicle driving intention representation method according to an embodiment of this application. Optionally, the method may be applied to the foregoing vehicle, for example, the vehicle shown in FIG. 1. As shown in FIG. 2, the vehicle driving intention representation method may include step 201 to step 203. It should be understood that, for ease of description in this application, a sequence of 201 to 203 is used for description, but this is not intended to constitute a limitation that the method is necessarily performed in the foregoing sequence. An execution sequence, execution time, a quantity of execution times, and the like of the foregoing one or more steps are not limited in embodiments of this application. The following uses an example in which steps 201 to 203 of the vehicle driving intention representation method are performed by a vehicle for description. This application is also applicable to another execution body like a CDC. Steps 201 to 203 are specifically as follows.

201: Obtain environment information of a vehicle.

The environment information may be understood as information representing a reason why the vehicle makes a driving decision.

Various sensors are mounted on the vehicle, and the sensors can collect the environment information of the vehicle in real time.

Optionally, a plurality of types of information outside the vehicle may be obtained based on the various sensors, and information that is related to driving decision-making of the vehicle and that is obtained through analysis and screening is the environment information.

For example, the environment information, for example, raw data like a traffic sign, a traffic light, a lane line, a surrounding vehicle, a pedestrian, and obstacle information, may be collected by using a plurality of sensors mounted on the vehicle. In this embodiment of this application, the plurality of sensors may include a lidar, a millimeter wave radar, an ultrasonic radar, a monocular camera, a binocular camera, or the like. The environment information may indicate information like an upper limit of a road speed limit, a lower limit of a road speed limit, stopped driving ahead, whether parking is allowed, turning left or right, a vehicle traveling direction, a turning radius, lane directions on both sides, and whether lane change is allowed.

For another example, environment information like an external picture photographed by the vehicle by using a camera, point cloud data obtained by a lidar, and obstacle/pedestrian data obtained by a distance sensor (a distance rangefinder) may be obtained.

202: Obtain intention information of a driving behavior of the vehicle based on the environment information and a vehicle status of the vehicle, where the intention information includes driving purpose information and vehicle control information, the driving purpose information represents a driving decision for the environment information, and the vehicle control information represents traveling information when the vehicle executes the driving decision.

The vehicle status may include one or more of a speed, an acceleration, a steering angle, an angular velocity, and the like of the vehicle.

The driving decision is information obtained based on environment sensing and a navigation system, and includes a lane to be selected, whether to change a lane, whether to follow a vehicle, whether to detour, whether to stop, and the like.

The traveling information may be understood as whether the vehicle needs to accelerate, decelerate, or keep at a constant speed, a traveling direction of the vehicle, or the like.

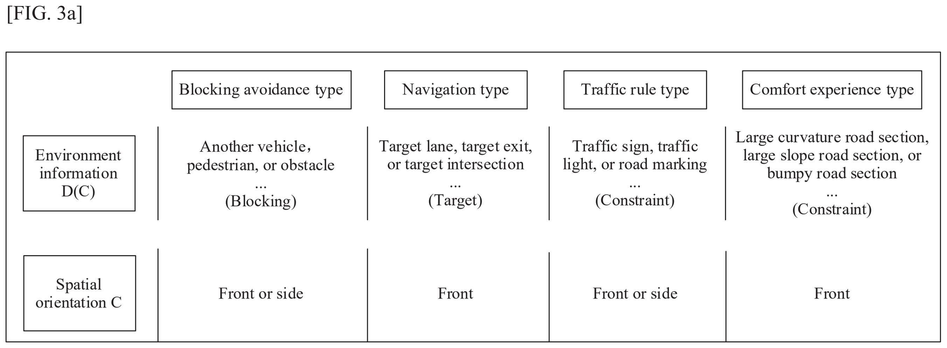

The environment information D(C) may be classified into blocking information, target information, and a constraint. As shown in FIG. 3a, the blocking information is an obstacle that hinders the vehicle from continuing an original driving behavior, and includes another vehicle, a pedestrian, an obstacle, and the like on a road. The target information is information related to a traveling target of the vehicle, for example, a navigation destination, a target lane, a target exit, and target intersection information. The constraint is information related to traffic rules or ride comfort, and information that indicates to change a driving behavior to comply with the traffic rules or make ride more comfortable, for example, a traffic sign, a signal light, a road marking, a large curvature road section, or a large slope road section, and a bumpy road section.

Further, the environment information may further include spatial orientation information C, that is, a spatial orientation of the blocking information, the target information, and the constraint, for example, information about a front side, a rear side, and a side relative to an ego vehicle.

The driving purpose information D(B) represents a traveling decision for the environment information. It may be understood that the traveling decision corresponds to the environment information, that is, has a relative relationship with a cause.

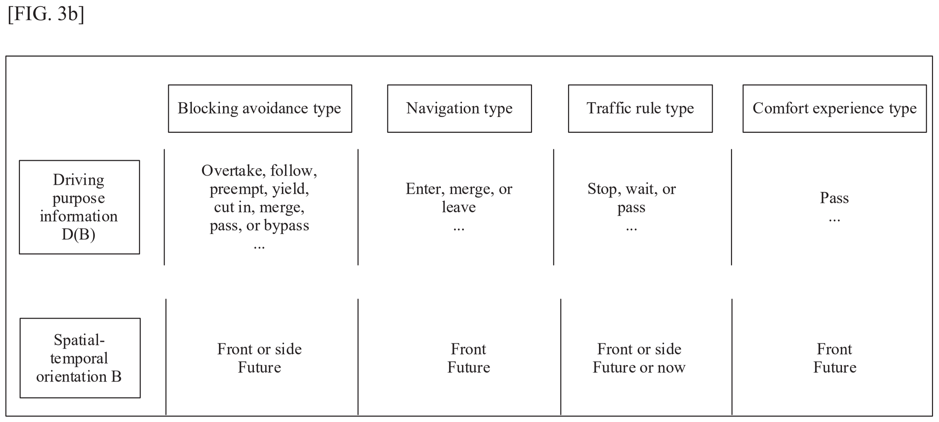

For example, as shown in FIG. 3b, for a cause of a blocking avoidance type, a corresponding relative relationship includes: overtaking, following, preempting, yielding, cutting-in, merging, passing, or bypassing. The relative relationship indicates which driving behavior the ego vehicle is to be performed for a corresponding cause, namely, a driving decision. Examples are as follows:
(1) overtake another vehicle/a pedestrian/an obstacle (overtaking may be understood as emphasizing a behavior of the ego vehicle relative to a person or a vehicle that is in front of the ego vehicle or in front of a side of the ego vehicle and that travels in a same direction as the ego vehicle);
(2) follow another vehicle/a pedestrian/an obstacle;
(3) preempt/yield another vehicle/a pedestrian/an obstacle (preempting and yielding may be understood as emphasizing a sequence between the ego vehicle and another vehicle or person that has a traveling track intersection with the ego vehicle, where preempting indicates that the ego vehicle travels first, a vehicle or person preempted by the ego vehicle needs to be a vehicle or person in front of the ego vehicle, and a vehicle or person yielded by the ego vehicle needs to be a vehicle or person that has a driving track intersection with the ego vehicle);
(4) cut in another vehicle (cutting in a space, for example, cutting in a space between two vehicles);
(5) merge into another vehicle (merging into a vehicle stream, where a specific merging space is not specified);
(6) pass another vehicle/a pedestrian/an obstacle (passing a narrow space on a road due to an obstacle); or
(7) bypass another vehicle/a pedestrian/an obstacle.

For another example, for a cause of a navigation type, a corresponding relative relationship includes: entering, merging, and leaving. The relative relationship indicates a driving behavior performed by the ego vehicle for a corresponding cause, for example, entering a target lane/exit/intersection (when the ego vehicle is not blocked by another vehicle), merging into a target lane/exit/intersection (there is another vehicle in the target lane/exit/intersection), or leaving a target lane/exit/intersection.

For another example, for a cause of a constraint type, a corresponding relative relationship includes the following two cases.

For a traffic rule type, a corresponding relative relationship includes parking, waiting, or passing, where the relative relationship indicates a driving behavior performed by the ego vehicle for a corresponding cause. For example, when encountering a traffic sign/signal light/road marking, the ego vehicle performs a driving behavior of parking/waiting/passing.

For a comfort experience type, a driving behavior to be performed by the ego vehicle is passing.

Further, the driving purpose information further includes spatial-temporal orientation information B. The spatial-temporal orientation information includes time information and spatial orientation information. For example, the time information indicates a time point at which a purpose (determined driving behavior) is to occur, and specifically includes present time information, future time information, and completion time information (indicating that the purpose has occurred). The spatial orientation information indicates a location of an obstacle relative to the ego vehicle, including a front direction, a side direction, and the like.

The vehicle control information D(A) represents traveling information when the vehicle executes the driving decision.

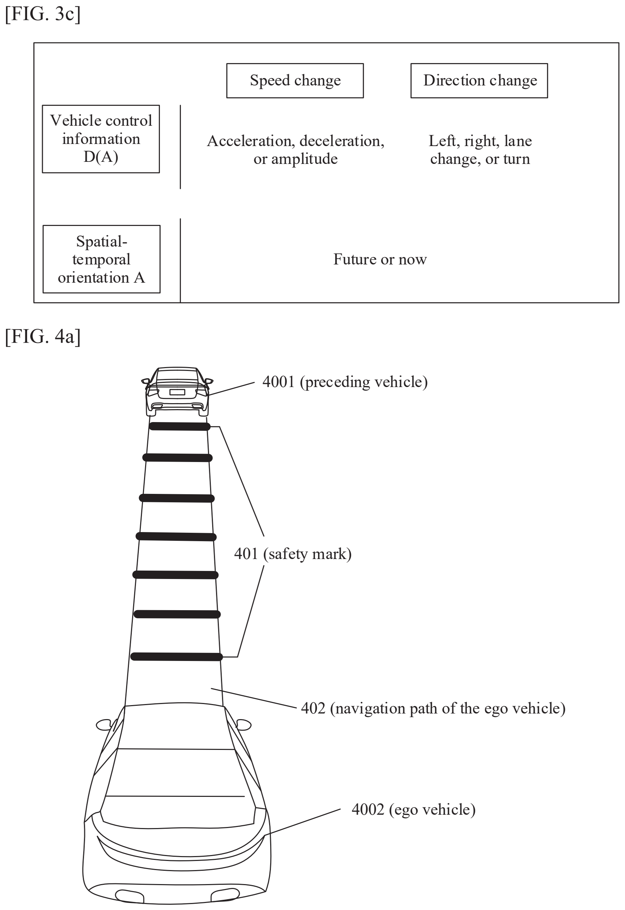

As shown in FIG. 3c, the vehicle control information includes a motion (driving) behavior. The motion behavior may be classified into a speed change (whether acceleration or deceleration is performed, an amplitude of a speed change (that is, slow/sudden acceleration/deceleration)), a direction change (leftward or rightward, lane change or turning), and the like.

The vehicle control information may further include occasion information A. The occasion information includes motion behavior occurrence time/a motion behavior occurrence place. The occasion information may include time information, for example, indicating whether the motion behavior occurs immediately or in the future (after preset duration). For example, a motion behavior starts at a time point e1, and ends at a time point e2 after a time length t1. The time length t1 corresponds to the occasion information. The occasion information may further include spatial information, that is, a spatial location relationship related to the ego vehicle in the vehicle control information. For descriptions of the spatial-temporal orientation information, refer to the foregoing descriptions. Details are not described herein again.

It should be noted that the foregoing example is described by using an example in which the intention information of the driving behavior of the vehicle is obtained based on the environment information and the vehicle status. Certainly, the intention information of the driving behavior of the vehicle may alternatively be obtained based on other information, for example, the information may include information like traffic light data received through communication with a traffic light, data of another vehicle obtained through communication with the another vehicle, and brake/tire pressure data of the vehicle. For another example, the information may further include internal information of a cockpit, for example, an in-cockpit temperature collected by a temperature sensor, and an in-cockpit image collected by an in-vehicle image sensor. This is not limited in this solution.

203: Display a safety mark and a speed mark based on the driving purpose information and the vehicle control information, where the safety mark indicates safe traveling of the vehicle, and the speed mark indicates at least one of accelerated traveling and decelerated traveling of the vehicle.

That the safety mark indicates safe traveling of the vehicle may be understood as that the vehicle can pass safely, an area corresponding to the safety mark is safe, and no dangerous behavior like a collision may occur. A scenario corresponding to the safety mark may include following a vehicle, passing another vehicle/a pedestrian/an obstacle, overtaking a vehicle, passing an intersection, and the like.

The following describes the safety mark.

The safety mark may represent that traveling time and space corresponding to the safety mark are safe, so that a user does not need to worry about a danger like a collision of the vehicle.

The safety mark may include a time distance mark, the time distance mark is N parallel short lines with an equal spacing between an obstacle and the vehicle, and N is an integer not less than 2. For example, the time distance mark is displayed in a vehicle following scenario.

A time headway indicates maximum reaction time of a driver of a trailing vehicle when a current vehicle is braked. For safety, a shortest time headway can be set to about 2 seconds.

As shown in FIG. 4a, a safety mark 401 is a time distance mark. The time distance mark is superimposed on a navigation path 402 (used to present, to a driver, a path in which an ego vehicle is to travel) of the ego vehicle. Specifically, several parallel short lines are displayed between a visual element 4002 indicating the ego vehicle and a visual element 4001 indicating an obstacle (a preceding vehicle), and a spacing between the short lines indicates a time distance. A sparser spacing indicates a longer time distance, and a denser spacing between the short lines indicates a shorter time distance. Optionally, spacings between the plurality of parallel short lines may be equal, or the spacings may gradually decrease from the ego vehicle to the preceding vehicle. Optionally, a quantity of short lines may indicate a time distance that is set. A smaller quantity of short lines indicates a shorter time distance that is set, and a larger quantity of short lines indicates a longer time distance that is set. The time distance is set, to intuitively prompt the user that driving is safe.

It may be understood that, in the accompanying drawing, for example, "401 (safety mark) "only indicates that a corresponding safety mark is displayed in an area corresponding to "401 (safety mark)." When the corresponding safety mark is displayed, "401 (safety mark) "is not displayed. This is also applicable to other accompanying drawings of this application, and details are not described herein again.

For another example, the safety mark may include a mark of a relative location relationship between the obstacle and the vehicle, the relative location relationship mark is a short line or an arc between a navigation path of the vehicle and the obstacle, and the short line is parallel to a navigation direction of the vehicle.

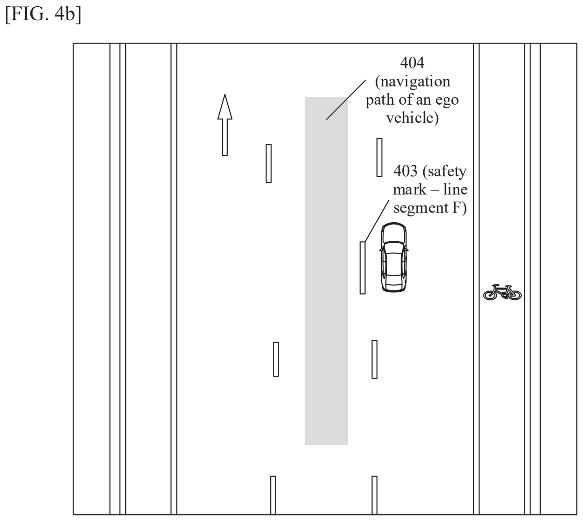

The relative location relationship may include a parallel relationship and a cross relationship. The parallel relationship may be understood as that an ego vehicle and another vehicle travel in different lanes (the ego vehicle and the another vehicle may travel in a same direction or in a reverse direction), and the ego vehicle may pass the another vehicle. That the ego vehicle passes the another vehicle, for example, may be that the ego vehicle passes the preceding vehicle from a left side or a right side, or may be that the ego vehicle passes the preceding vehicle from a same direction or a reverse direction. In this case, the two vehicles may travel close to each other. In other words, there is a parallel relationship between the two vehicles. In a top view shown in FIG. 4b, a safety mark 403 corresponding to the parallel relationship may be a short line that is parallel to a navigation path 404 of an ego vehicle and that is displayed in a direction in which an obstacle (that is, a vehicle (representing a preceding vehicle) in the figure) is adjacent to the navigation path 404 of the ego vehicle. For example, when the ego vehicle travels in an adjacent lane of the preceding vehicle, a line segment F that is parallel to the navigation path and that is near the preceding vehicle may be displayed.

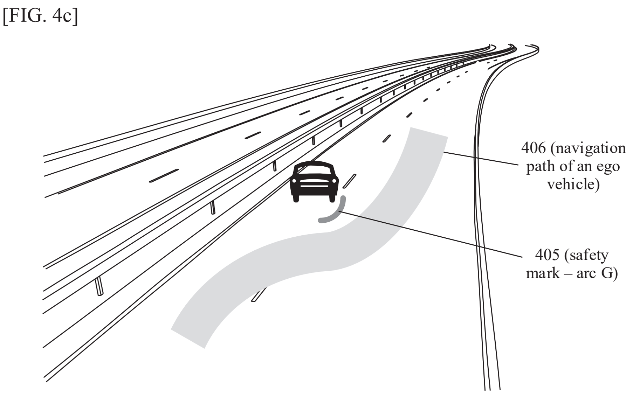

The cross relationship may be understood as that the ego vehicle is to overtake the preceding vehicle. It may be that the ego vehicle overtakes the preceding vehicle from a rear right side, or the ego vehicle overtakes the preceding vehicle from a rear left side. As shown in FIG. 4c, a safety mark 405 corresponding to the cross relationship may be a cross mark displayed near an obstacle in a direction in which the obstacle (a vehicle in the figure represents a preceding vehicle) is adjacent to a navigation path 406 of an ego vehicle, for example, an arc G shown in FIG. 4c.

Based on the relative location relationship mark, the user can learn that the vehicle can safely pass the area.

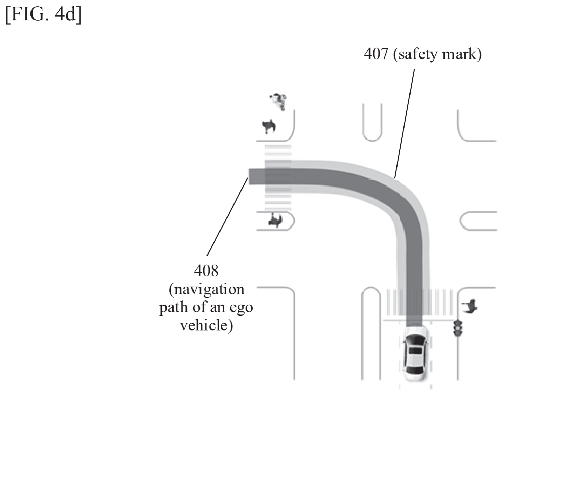

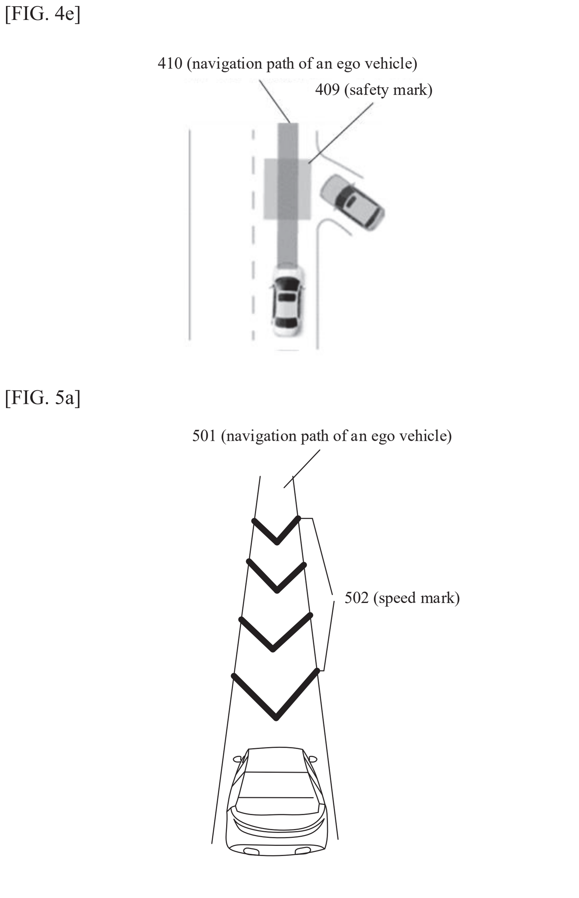

For still another example, the safety mark may include highlighting an intersection area on the navigation path. As shown in FIG. 4d, in an intersection scenario, a highlighted area 407, that is, an arc area in the figure, is additionally displayed on a path that is on a navigation path 408 of an ego vehicle and that corresponds to the intersection area and that exceeds a display area of the path, so that a user can rest assured that a road section can be passed safely. Further, as shown in FIG. 4e, another vehicle merges from a right side. For an ego vehicle, a safety mark 409, that is, a rectangular area in the figure, is highlighted on a navigation path 410 of the ego vehicle at an intersection. Certainly, the display may alternatively be performed in another form, for example, a highlighted circular area, or another graph or text. This is not limited in this solution.

It may be understood that the safety mark is merely an example, and is not specifically limited. For example, the time distance mark may be highlighting an area between the obstacle and the vehicle. For another example, the relative location relationship mark may be a highlighted area or parallel short lines.

The following describes the speed mark.

The speed mark indicates at least one of accelerated traveling and decelerated traveling of the vehicle. For example, an accelerated traveling scenario may be a scenario in which a speed limit on a road sign is increased. For example, a vehicle travels from a road section with a speed limit of 40 to a road section with a speed limit of 60. For another example, a vehicle travels from an urban road to a highway. Alternatively, the accelerated traveling scenario may be a scenario in which a vehicle changes a lane to overtake another vehicle. Alternatively, the accelerated traveling scenario may be a scenario in which a vehicle accelerates to pass a traffic light. When green light is about to turn off, an ego vehicle may quickly pass the traffic light at a safe speed. Alternatively, the accelerated traveling scenario may be a scenario in which an ego vehicle starts to pass a traffic light when a red light turns to a green light. For another example, the accelerated traveling scenario may be a scenario in which a preceding vehicle is far away from an ego vehicle, and safe traveling can still be ensured when the ego vehicle accelerates. For another example, the accelerated traveling scenario may be an intersection scenario in which an intersection is safe and can be quickly passed. The decelerated traveling scenario may be, for example, a scenario in which a speed limit on a road sign is decreased, a scenario of a preset road section speed limit, a braking scenario, or a scenario in which there is an obstacle or a pedestrian ahead. The scenarios are not limited in this solution.

For example, the speed mark includes continuous fold lines or arcs; and a convex direction of the fold lines or arcs towards a direction of the vehicle (facing a vehicle front) indicates decelerated traveling of the vehicle, and a convex direction of the fold lines or arcs towards the navigation direction of the vehicle indicates accelerated traveling of the vehicle.

As shown in FIG. 5a, fold lines corresponding to a speed mark 502 are superimposed on a navigation path 501 of an ego vehicle. A sharp angle (a convex direction) of the fold lines towards a direction of the vehicle indicates decelerated traveling of the vehicle. As shown in FIG. 5b, fold lines corresponding to a speed mark 504 are superimposed on a navigation path 503 of an ego vehicle, and a sharp angle of the fold lines towards a front direction (a navigation direction) indicates accelerated traveling of the vehicle.

The foregoing uses a fold line as an example. Alternatively, a graph or a text like an arc or an arrow may be used. This is not limited in this solution.

Based on the display of the speed mark, the user knows a time range in which the vehicle accelerates or decelerates.

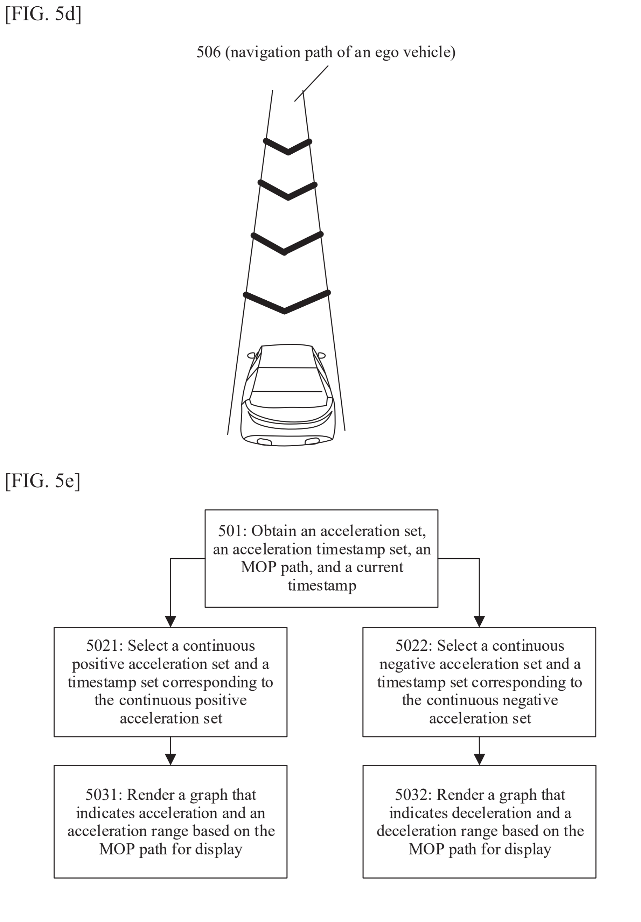

Preferably, an angle of the fold lines or arcs indicates a change amplitude of the acceleration or deceleration. It may be understood that an included angle between connection lines from two endpoints of an arc to a center of a circle in which the arc is located is an angle of the arc. A smaller angle of the fold lines (or arcs) indicates a larger change amplitude of the speed, for example, fold lines (or arcs) superimposed on a navigation path 505 of an ego vehicle shown in FIG. 5c. A larger angle of the fold lines (or arcs) indicates a smaller change amplitude of the speed, for example, fold lines (or arcs) superimposed on a navigation path 506 of an ego vehicle shown in FIG. 5d. In this way, a speed change can be displayed more flexibly, so that the user can intuitively learn of a speed change status.

As shown in FIG. 5e, an embodiment of this application further provides a rendering processing method for a speed mark. The method may include the following steps.

501: A vehicle or a CDC obtains an acceleration set, an acceleration timestamp set, an MOP path, and a current timestamp T₀ from an MDC. The acceleration set may be a series of acceleration values in a preset time range after the current moment T₀. The acceleration timestamp set may be time points at which the series of acceleration values in the preset time range after the current moment T₀ change.

5021: Select a continuous positive acceleration set and a timestamp set corresponding to the continuous positive acceleration set.

5031: Render a graph that indicates acceleration and an acceleration range based on the MOP path for display.

If this process is an acceleration process, the CDC renders the graph (for example, as shown in FIG. 5b) that indicates the acceleration and the acceleration range based on the MOP path.

The method further includes the following steps.

5022: Select a continuous negative acceleration set and a timestamp set corresponding to the continuous negative acceleration set.

5032: Render a graph that indicates deceleration and a deceleration range based on the MOP path for display.

If this process is a deceleration process, the CDC renders the graph (for example, as shown in FIG. 5a) that indicates the deceleration and the deceleration range based on the MOP path.

In a possible implementation, an end point of a speed mark is related to a start point of a safety mark. The relation may be, for example: (1) The end point of the speed mark is the start point of the safety mark; (2) There is a distance between the end point of the speed mark and the start point of the safety mark and the speed mark does not overlap the safety mark; or (3) The end point of the speed mark is located after the start point of the safety mark and the speed mark overlaps the safety mark.

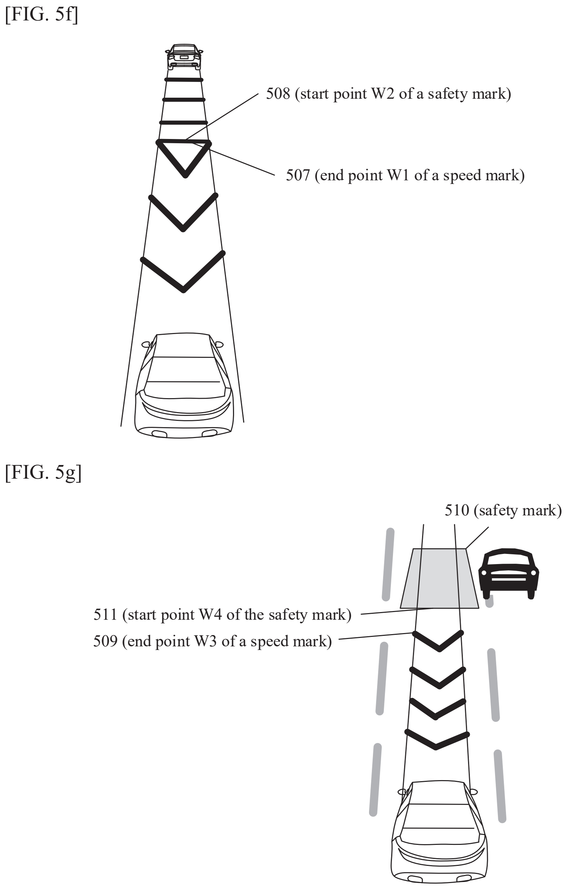

The case (1) in which the end point of the speed mark is the start point of the safety mark may be applied to a vehicle deceleration and following scenario. For example, as shown in FIG. 5f, the vehicle first decelerates. After the deceleration ends, the vehicle follows a preceding vehicle. In this case, an end point 507 of a speed mark is W1. A start point 508 of a safety mark is W2. In this scenario, the end point W1 of the speed mark is the start point W2 of the safety mark.

It may be understood that the start point and the end point in embodiments of this solution not only refer to a point, but also may be a spatial-temporal orientation of the point. To be specific, the end point of the speed mark and the start point of the safety mark are on a same straight line perpendicular to a navigation direction, that is, the end point of the speed mark and the start point of the safety mark are a same point.

The case (2) in which there is a distance between the end point of the speed mark and the start point of the safety mark and the speed mark does not overlap the safety mark may be applied to a scenario in which there is a dangerous vehicle or a vehicle traveling on a lane on a side. For example, as shown in FIG. 5g, an ego vehicle completes deceleration before entering a parallel area of a vehicle driving on a lane. After the deceleration ends, the ego vehicle slowly passes the area. In this case, an end point 509 of a speed mark is W3. A start point 511 of a safety mark 510 is W4. The start point 511 of the safety mark 510 is a nearest end between a preceding vehicle and the ego vehicle. In this scenario, there is a distance between the end point W3 of the speed mark and the start point W4 of the safety mark.

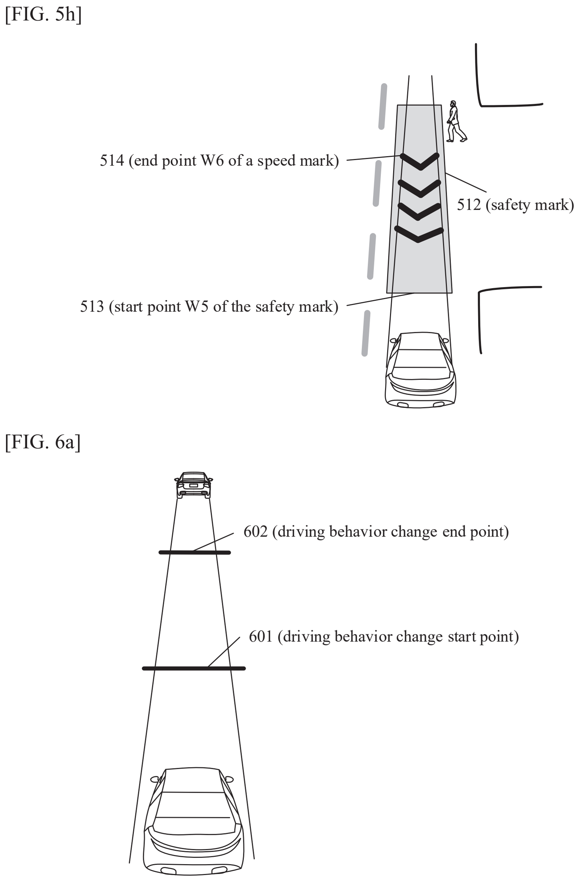

The case (3) in which the end point of the speed mark is located after the start point of the safety mark and the speed mark overlaps the safety mark may be applied to a scenario in which a vehicle gives way to a pedestrian in a process of entering an intersection. For example, as shown in FIG. 5h, an ego vehicle first enters an intersection. In a process in which the ego vehicle passes the intersection, the ego vehicle decelerates to give way to a pedestrian at the intersection. A start point 513 of a safety mark 512 is W5, and is a nearest end between the intersection and the ego vehicle. An end point 514 of a speed mark is W6. In this scenario, the end point W6 of the speed mark is located after the start point W5 of the safety mark.

Certainly, there may be another related case between the speed mark and the safety mark. This is not limited in this solution.

The foregoing describes the safety mark and the speed mark in the intention representation, and the following describes other intention representation by using examples.

In a possible implementation, a driving behavior change start point is further displayed based on driving purpose information and vehicle control information. Alternatively, a driving behavior change start point and a driving behavior change end point are further displayed based on driving purpose information and vehicle control information.

The driving behavior change start point indicates an orientation corresponding to earliest change time in time corresponding to speed change information and time corresponding to direction change information of a vehicle. For example, if the time corresponding to the speed change information of the vehicle is earlier than the time corresponding to the direction change information, the driving behavior change start point indicates an orientation corresponding to the time corresponding to the speed change information of the vehicle.

The driving behavior change end point indicates an orientation corresponding to latest change end time in time corresponding to the speed change information and time corresponding to the direction change information of the vehicle. For example, if the end time corresponding to the direction change information of the vehicle is later than the end time corresponding to the speed change information, the driving behavior change end point indicates an orientation corresponding to the end time corresponding to the direction change information of the vehicle.

As shown in FIG. 6a, a driving behavior change start point and a driving behavior change end point may be identified by using a straight line 601 and a straight line 602 that are perpendicular to a navigation path of an ego vehicle, or may be identified by using a curve or a graph. For example, the graph may be a circle, an ellipse, or a triangle.

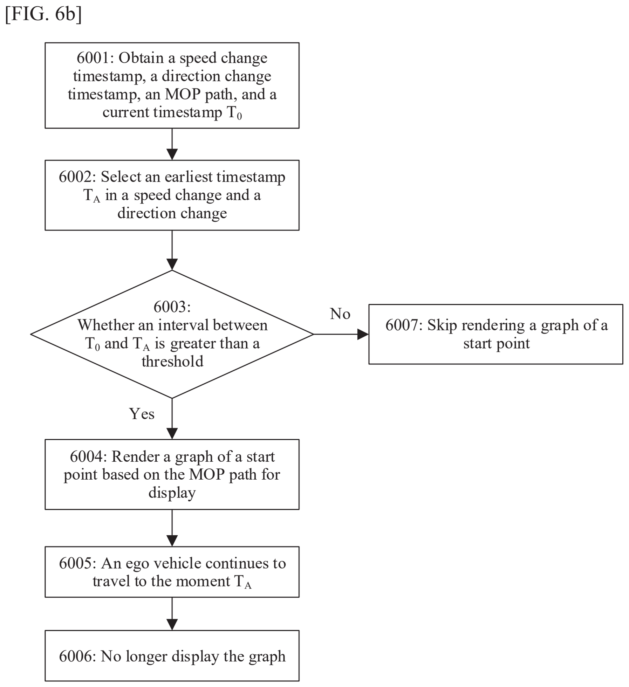

As shown in FIG. 6b, an embodiment of this application further provides a rendering processing method for a driving behavior change start point. The method may include the following steps.

6001: Obtain a speed change timestamp, a direction change timestamp, an MOP path, and a current timestamp T₀ from an MDC.

6002: Select an earliest timestamp T_{A} in the speed change and the direction change.

The speed change timestamp and the direction change timestamp are compared, to select the earliest timestamp T_{A} in the speed change and the direction change.

6003: Determine whether an interval between T₀ and T_{A} is greater than a threshold.

If the interval between T₀ and T_{A} is greater than the threshold, step 6004 is performed: Render a graph of the driving behavior change start point based on the MOP path for display.

6005: The ego vehicle travels to the timestamp T_{A}.

In this case, step 6006 is performed: A CDC no longer displays the driving behavior change start point.

If the interval between T₀ and T_{A} is not greater than the threshold, step 6007 is performed: Skip rendering a graph of the start point.

For the rendering processing method for the driving behavior change end point, refer to the descriptions in FIG. 6b. Details are not described herein again.

Based on the driving behavior change start point and the driving behavior change end point, a user may be intuitively prompted with a location at which the driving behavior of the vehicle is to change and a location at which the change ends.

In a possible implementation, a vehicle following status change mark may be further displayed based on the driving purpose information and the vehicle control information. The vehicle following status change mark is that a navigation path changes from thin to thick or from thick to thin, the change from thin to thick indicates to decelerate to follow a preceding vehicle, and the change from thick to thin indicates to accelerate to follow a preceding vehicle.

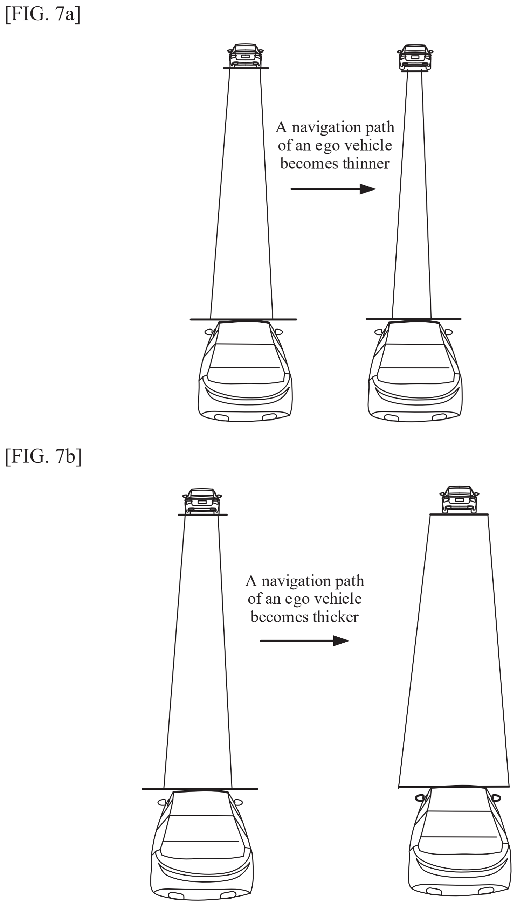

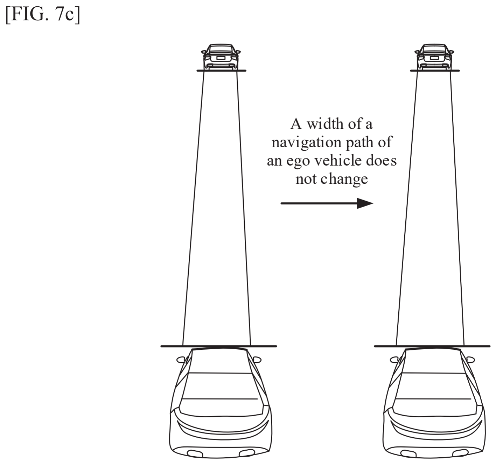

When the ego vehicle follows the preceding vehicle (the ego vehicle is in a vehicle following state), a status of following the preceding vehicle is expressed by using a width change of a path graph between the ego vehicle and the preceding vehicle. For example, as shown in FIG. 7a, if a navigation path of an ego vehicle becomes thinner, it indicates that acceleration is performed to follow a preceding vehicle. As shown in FIG. 7b, if a navigation path of an ego vehicle becomes thicker, it indicates that deceleration is performed to follow a preceding vehicle. For another example, as shown in FIG. 7c, if a width of a navigation path of an ego vehicle does not change, and is a default width (which may be understood as that no additional processing is performed on the navigation path), it indicates that traveling at a constant speed is performed to follow a preceding vehicle. Certainly, another identifier may alternatively be used. For example, an arrow indicates that deceleration or acceleration is performed to follow a preceding vehicle. This is not limited in this solution.

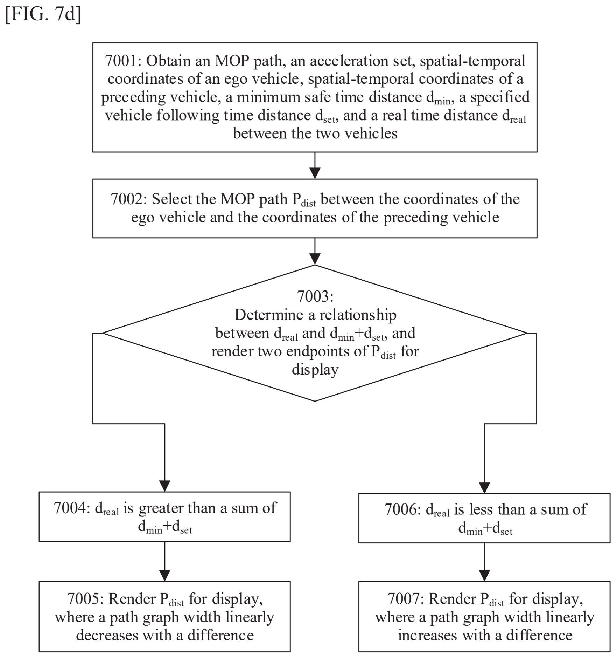

As shown in FIG. 7d, an embodiment of this application further provides a rendering processing method for a vehicle following status change mark in a vehicle following scenario. When an ego vehicle enters a "following a preceding vehicle" state, the method may include the following steps.

7001: Obtain an MOP path, an acceleration set, spatial-temporal coordinates of the ego vehicle, spatial-temporal coordinates of a preceding vehicle, a real time distance between the two vehicles, a minimum safe time distance, and vehicle following time distance setting information from an MDC.

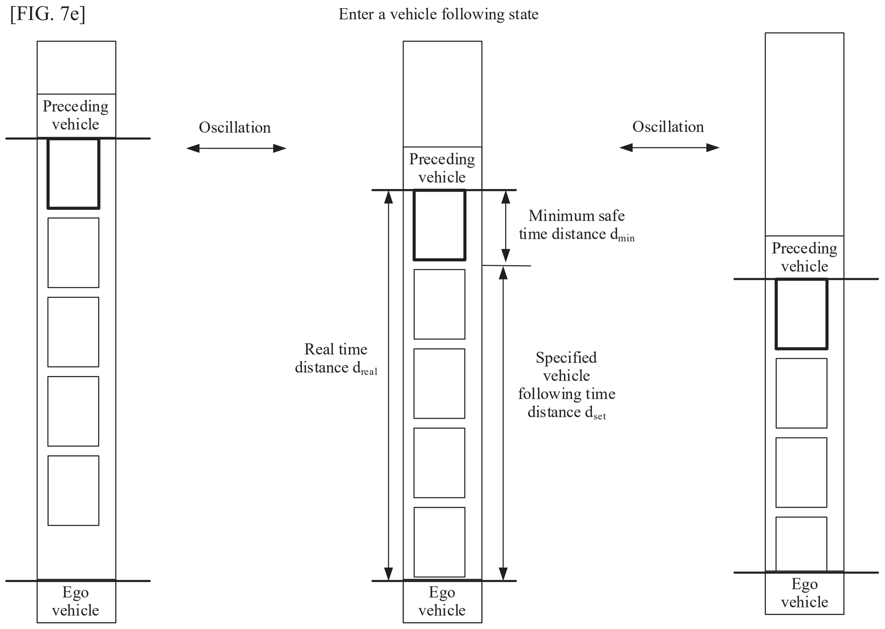

FIG. 7e is a diagram of a time distance relationship. A real time distance dᵣₑₐₗ between the two vehicles is a time distance between a vehicle front of the ego vehicle and a vehicle rear of the preceding vehicle. A preset minimum safe time distance dₘᵢₙ is a time distance at which a collision occurs if a real time distance is less than the time distance. A specified vehicle following time distance dₛₑₜ is set to a specified value, and the ego vehicle enters a vehicle following state when the vehicle following time distance is reached.

7002: Select the MOP path P_{dist} between the coordinates of the ego vehicle and the coordinates of the preceding vehicle.

7003: Determine a relationship between dᵣₑₐₗ and a sum of dₘᵢₙ+dₛₑₜ, and render two endpoints of P_{dist} for display.

7004: If dᵣₑₐₗ is greater than the sum of dₘᵢₙ+dₛₑₜ, perform step 7005.

7005: Render P_{dist} for display, where a path graph width linearly decreases with a difference.

When the real time distance between the two vehicles is greater than the sum of "the minimum safe time distance and the specified vehicle following time distance", for example, when the preceding vehicle accelerates, the ego vehicle may also accelerate to reduce a distance between the two vehicles, to enter the vehicle following state. Therefore, in the MOP path P_{dist} segment between the coordinates of the ego vehicle and the coordinates of the preceding vehicle, the path graph width linearly decreases with the difference between the sum of "the minimum safe time distance and the specified vehicle following time distance" and the real time distance between the two vehicles.

The method further includes the following steps.

7006: If dᵣₑₐₗ is less than the sum of dₘᵢₙ+dₛₑₜ, perform step 7007.

7007: Render P_{dist} for display, where a path graph width linearly increases with a difference.

When the real time distance between the two vehicles is less than the sum of "the minimum safe time distance and the specified vehicle following time distance", for example, when the preceding vehicle decelerates, the ego vehicle needs to decelerate to increase a distance between the two vehicles, to ensure safe traveling. Therefore, in the MOP path P_{dist} segment between the coordinates of the ego vehicle and the coordinates of the preceding vehicle, the path graph width linearly increases with the difference between the real time distance between the two vehicles and the sum of "the minimum safe time distance and the specified vehicle following time distance".

Based on the vehicle following status change mark, the user may be prompted that a status in which the ego vehicle follows the preceding vehicle changes.

In a possible implementation, a braking mark may be further displayed based on the driving purpose information and the vehicle control information. For example, in a braking scenario in which a traffic light is encountered or an obstacle suddenly appears in front, a braking mark is displayed. The braking mark may be a visual element perpendicular to a traveling direction, or may be a visual element whose color deepens/lightens from left to right continuously and changes periodically, or may further be a visual element that changes from large to small or from present to disappeared. Certainly, the foregoing visual elements may be combined for use. This is not limited in this solution.

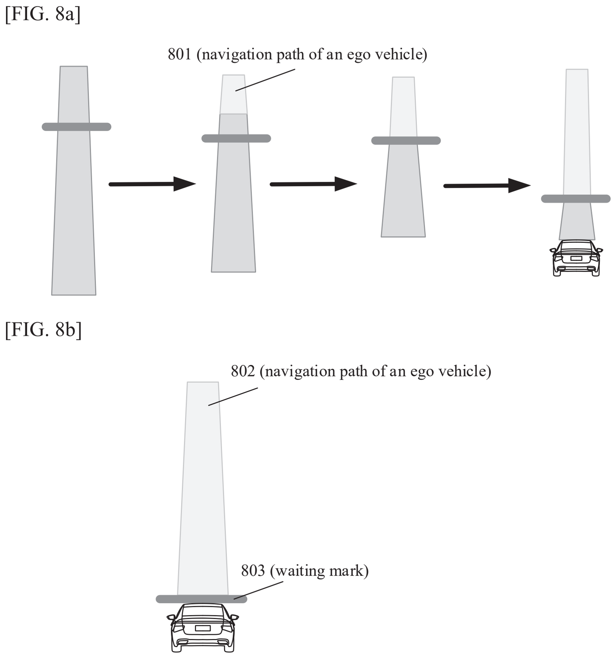

For example, FIG. 8a is a diagram of a change process of a braking mark in a braking process. First, when a vehicle has not reached a location of the braking mark, the braking mark may include a straight line perpendicular to a traveling direction, and may further include a deepened color of a navigation path 801 of an ego vehicle. As the vehicle continuously approaches the straight line perpendicular to the traveling direction, the braking mark dynamically changes. The braking mark continuously shortens a deepened color area on the navigation path from two directions (a direction towards a moving direction of the ego vehicle and a direction towards the ego vehicle) at the same time. When the vehicle moves closer to the straight line, and the deepened color area on the navigation path is shortened to an area between the ego vehicle and the straight line perpendicular to the traveling direction, the deepened color area is shortened only from the direction towards the moving direction of the ego vehicle. It should be noted that this example is described by using only an example in which the visual element is a straight line or the like. The visual element may alternatively be a curve, a graph (for example, a circle or a triangle), or the like. This is not limited in this solution.

Based on the braking mark, a user can intuitively learn a location at which the vehicle is braked.

In a possible implementation, a waiting mark may be further displayed based on the driving purpose information and the vehicle control information. For example, the waiting mark is applied to a scenario in which a vehicle needs to wait, for example, the vehicle stops and waits for a traffic light, and the vehicle waits for a pedestrian to cross a road. The waiting mark may be a visual element perpendicular to a traveling direction, or may be a visual element whose color deepens/lightens from left to right continuously and changes periodically, or may further be a visual element that changes from large to small or from present to disappeared. Certainly, the foregoing visual elements may be combined for use. This is not limited in this solution.

For example, as shown in FIG. 8b, a waiting mark 803, for example, a horizontal straight line, is displayed at a lower end (an end near a vehicle) of a navigation path 802 of an ego vehicle. Optionally, the waiting mark further includes that the navigation path is displayed in a light color. For example, display of the horizontal straight line may further include that a color of the straight line changes periodically with different transparency/deepness (equivalent to an effect of a breathing light). For example, the color of the waiting mark is deep and the transparency is low, or the color of the waiting mark is light and the transparency is high. It should be noted that this example is described by using only an example in which the visual element is a straight line or the like. The visual element may alternatively be a curve, a graph (for example, a circle or a triangle), or the like. This is not limited in this solution.

Based on the waiting mark, a user can intuitively learn a location at which the vehicle waits.

In a possible implementation, a waiting countdown mark may be further displayed based on the driving purpose information and the vehicle control information. The waiting countdown mark is displayed to indicate when the waiting ends. In an actual application scenario, waiting countdown needs to be performed when countdown data can be obtained, for example, when a red light turns green. Generally, "wait" is displayed first, and when the waiting is about to end, the waiting countdown is displayed. For example, the waiting countdown mark may be a visual element perpendicular to a traveling direction, or may be a visual element whose color deepens/lightens from left to right continuously and changes periodically, or may further be a visual element that changes from large to small or from present to disappeared. Certainly, the foregoing visual elements may be combined for use.

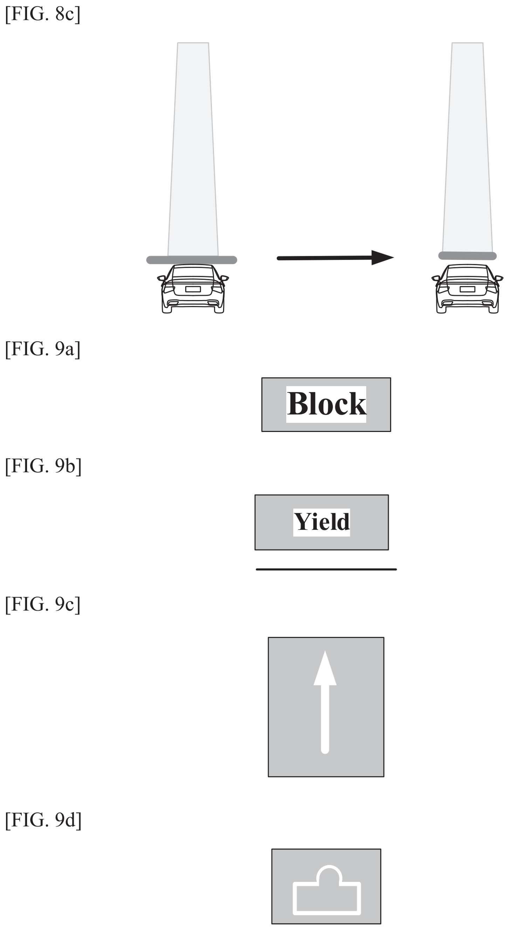

As shown in FIG. 8c, a waiting countdown mark is obtained by gradually shortening a waiting mark to a preset length (for example, a width is the same as that of a navigation path, refer to a right figure in FIG. 8c) based on the waiting mark (a left figure in FIG. 8c), or shortening to a length of 0, or the like. Certainly, another setting may also be used, for example, a number or a dot is used for presentation. It should be noted that this example is described by using only an example in which the visual element includes a straight line or the like. The visual element may alternatively be a curve, a graph (for example, a circle or a triangle), or the like. This is not limited in this solution.

Based on the waiting countdown mark, a user can intuitively learn when the vehicle waiting ends.

The foregoing examples are described by using an example in which the intention information includes the driving purpose information and the vehicle control information. In a possible implementation, the intention information may further include the environment information, that is, a cause for a driving decision. For example, the vehicle further displays a target component, and the target component is a text and/or an icon. The target component represents the environment information, to indicate a cause type, an impact on the vehicle, and the like.

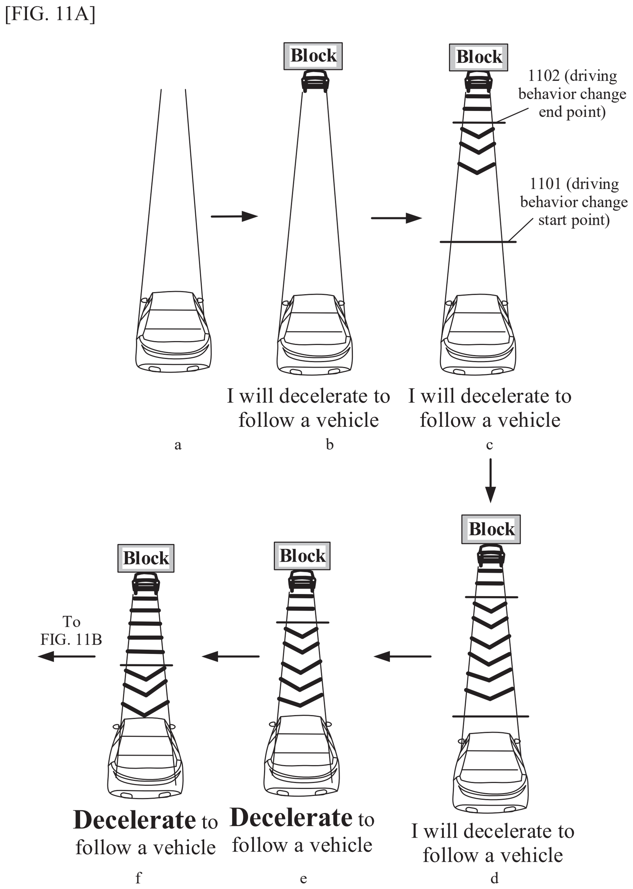

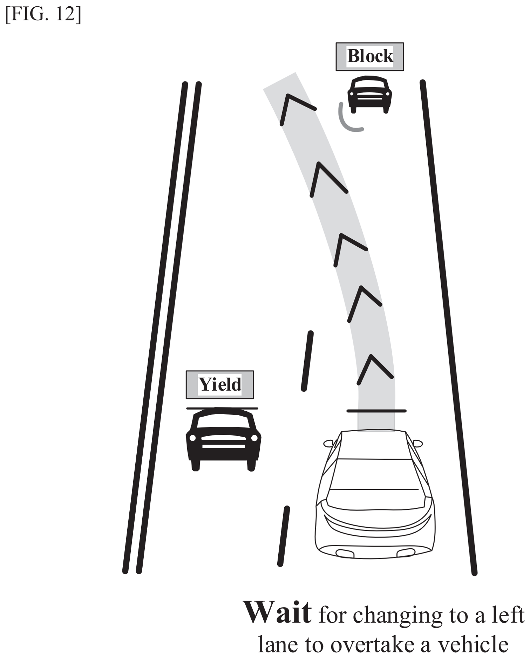

For example, the target component may be, for example, texts such as "Block" shown in FIG. 9a, or "Yield" or "Yield" shown in FIG. 9b, or may be a navigation guide shown in FIG. 9c, or a deceleration belt indication shown in FIG. 9d. For another example, the target component may be "Block" shown in b in FIG. 11A or FIG. 12, or "Yield" shown in FIG. 12. Different cause categories implicitly include an impact caused by the cause. For example, "Block" indicates that another vehicle blocks an ego vehicle; "Yield" indicates a result that an ego vehicle needs to yield to another vehicle, and "Navigation" indicates that an ego vehicle needs to travel on a lane due to navigation. For another example, "Deceleration belt" indicates that an ego vehicle needs to decelerate due to an existence of a deceleration belt.

Based on the target component, a user may intuitively learn of a cause for making a corresponding driving decision by the vehicle.

In the foregoing examples, various marks, components, and the like are described by using a visual element as an example. The following describes a text display mode.

Intention information may alternatively be presented by using a text (text content).

In a possible implementation, semantic content displayed by a corresponding text and a display occasion of the corresponding text may be obtained based on at least one of the driving decision, the vehicle status, and the vehicle control information of the vehicle. The text is further displayed. For example, a timestamp, an acceleration, a speed, a steering angle, a sensed signal, an MOP path, and the like may be obtained based on the driving decision, the vehicle status, and the vehicle control information of the vehicle.

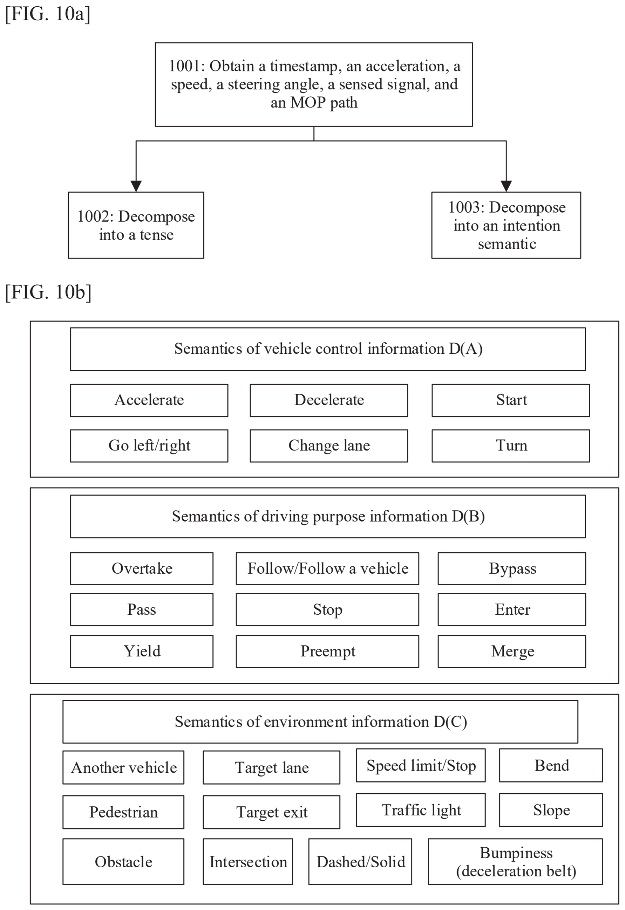

FIG. 10a is a schematic flowchart of a method for obtaining semantic content displayed by a text according to an embodiment of this application. The method includes the following steps.

1001: A vehicle or a CDC obtains a speed change timestamp, a direction change timestamp, an acceleration timestamp, an acceleration, a speed, a steering angle, a sensed signal (which may be, for example, the environment information), and a MOP path from an MDC.

1002: Decompose the information obtained in step 1001 into a tense.

1003: Decompose the information obtained in step 1001 into semantic content.

Based on this, the semantic content of text display may be obtained for display.

Semantic content included in the environment information D(C), the driving purpose information D(B), and the vehicle control information D(A) may be shown in FIG. 10b. The semantic content included in the environment information D(C) includes: another vehicle, a pedestrian, an obstacle, a target lane, a target exit, an intersection, a speed limit/stop, a traffic light, a bend, and the like. The semantic content included in the driving purpose information D(B) includes: overtaking, passing, yielding, following, parking, preempting, bypassing, and the like. The semantic content included in the vehicle control information D(A) includes: acceleration, deceleration, lane change, starting, and the like.

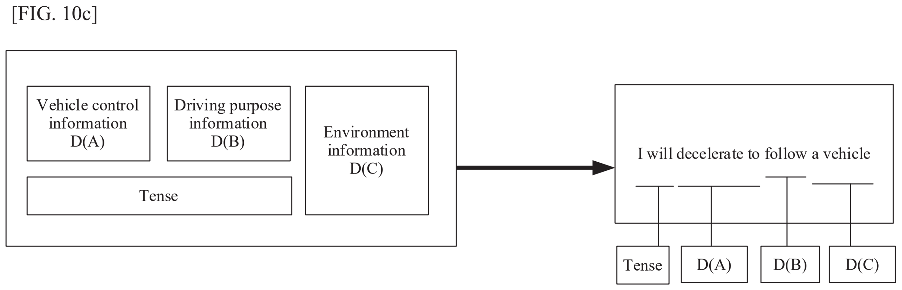

For example, in a vehicle deceleration and following scenario, a temporal state "will" is obtained in the foregoing manner or "I will" is obtained by adding a subject, and semantic content includes "vehicle" corresponding to the environment information D(C), "follow" or "follow" corresponding to the driving purpose information D(B), and "decelerate" corresponding to the vehicle control information D(A). Details are shown in FIG. 10c.

In the foregoing example, the semantic content included in the environment information D(C), the driving purpose information D(B), and the vehicle control information D(A) is used as an example for description, or text presentation may be performed based on any combination of the semantic content of the three pieces of information. In other words, the text presentation in this example may be combined in a chronological order of behaviors, and may dynamically change a state.

Table 1 shows a semantic content combination manner according to an embodiment of this application.

**Table 1**

| Intention initiator | Tense | Intention semantic structure | Example |
|---|---|---|---|
| I (ego vehicle) | will | D(A)+D(B)+D(C) | change to a left lane + to overtake + another vehicle; decelerate + to enter + a target lane |
| | | D(A)+D(B) | stop + to yield; decelerate + to pass |
| | | D(B)+D(C) | merge into + a right target lane; bypass + a front construction site |
| | | D(A) or D(B) | decelerate; accelerate; stop; yield |
| | am waiting to | D(A) or D(B) | start; change a lane; turn merge; pass |

In a possible implementation, first text content is first displayed, where the first text content includes a first text, a second text, and a third text. The first text indicates that at least two consecutive behaviors corresponding to the vehicle control information are to be performed, the second text indicates a first behavior in the at least two consecutive behaviors, and the third text indicates a second behavior in the at least two consecutive behaviors.

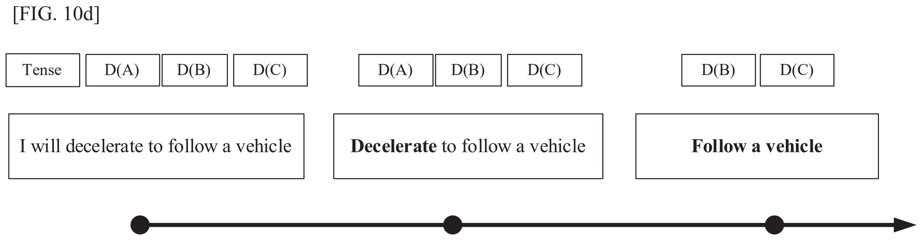

For example, FIG. 10d shows a vehicle deceleration and following scenario. A first phase is a plan prompt phase. A text "I will decelerate to follow a vehicle" is displayed. A size and color of each word are the same, indicating that the deceleration and vehicle following are to be executed. In this case, the first text is "will" or "I will", the second text is "decelerate", and the third text is "follow a vehicle".

Second text content is displayed when the vehicle starts to perform the first behavior, where the second text content includes the second text and the third text, and display strength of the second text is higher than that of the third text.

The display strength may be understood as that the text has a larger font, a deeper color, or the like.

Correspondingly, a corresponding second phase is a plan execution phase. An example in which two sub-phases "decelerate" and "follow a vehicle" are specifically divided is used for description. In the deceleration phase, when a deceleration and vehicle following behavior is being executed, "Decelerate to follow a vehicle" is displayed. If a font size of "Decelerate" is large, it indicates that "Decelerate" is emphasized. Alternatively, "I will decelerate to follow a vehicle" is displayed. Further, after the "decelerate" phase, there is a next plan "follow a vehicle". When the deceleration is to be completed, and a "follow a vehicle" behavior is planned to be performed, the font size of "decelerate" becomes smaller, and a color becomes lighter.

Third text content is displayed when the vehicle starts to perform the second behavior, where the third text content includes the third text.

For example, in the vehicle following phase, when the deceleration is completed and the "follow a vehicle" behavior is being performed, a text "Decelerate" disappears, and only a text "Follow a vehicle" or a text "I am following a vehicle" is displayed. This is not limited in this solution.

In this example, two consecutive behaviors are used as an example for description. Alternatively, there may be a plurality of consecutive behaviors, or there may be one behavior. This is not limited in this solution.

Based on the foregoing text display and a change in a font size, a color, and the like, a user may be notified of the vehicle traveling information and a phase of executing the traveling information.

The foregoing example is described by using text display. Alternatively, voice information may be obtained based on the intention information, and the voice information is played. For example, the voice information is played by using a speaker. For example, the foregoing text may be played.

The vehicle may display the foregoing various marks, components, text display, and the like to the user by using an instrument cluster (instrument cluster, IC), an instrument center screen (instrument center screen, ICS), or an augmented reality-head up display (Augmented Reality-Head Up Display, AR-HUD).

For example, a unified interface may be disposed on the instrument center screen/instrument cluster of the vehicle, to display the foregoing various marks, components, text display, and other intention expression. For example, the interface may be set in an area in which a panorama of the vehicle is located, and is displayed above the vehicle in a floating manner. The panorama of the vehicle is an area in which the user frequently views, and the user may understand, when obtaining the intention expression, the intention expression with reference to various information in the panorama when the interface is set in the area in which the panorama of the vehicle is located. The interface may always be displayed on the instrument center screen/instrument cluster, so that the user may know that the intention expression can be obtained from the fixed location. The interface can alternatively be activated in a specific mode. For example, the interface is displayed when the instrument center screen displays a panoramic image.

Certainly, the vehicle may further send the foregoing intention expression to a user device side for presentation. For example, the foregoing intention expression may be sent to an electronic device like a mobile phone, a tablet computer, a sound box, or a light device by using a wireless communication system, so that the user knows the vehicle driving intention expression by using the electronic device like the mobile phone, the tablet computer, the sound box, or the light device. In this way, information communication between the user and the vehicle is implemented, and the user can better understand the vehicle driving intention.

Based on one or more of the foregoing displayed marks, components, text display, and voice prompt, the user may know in advance which driving behavior the vehicle is to be performed in a time range and how the driving behavior is to be performed. This removes a "communication" barrier between an intelligent vehicle and a vehicle owner, and improves user's trust in the intelligent vehicle.

It should be noted that forms such as graphs and texts corresponding to various marks and components in embodiments of this application are merely examples, and may be expressed by using one or a combination of another graph, text, or voice, to achieve an objective of prompting the user. A specific form is not limited in this solution.

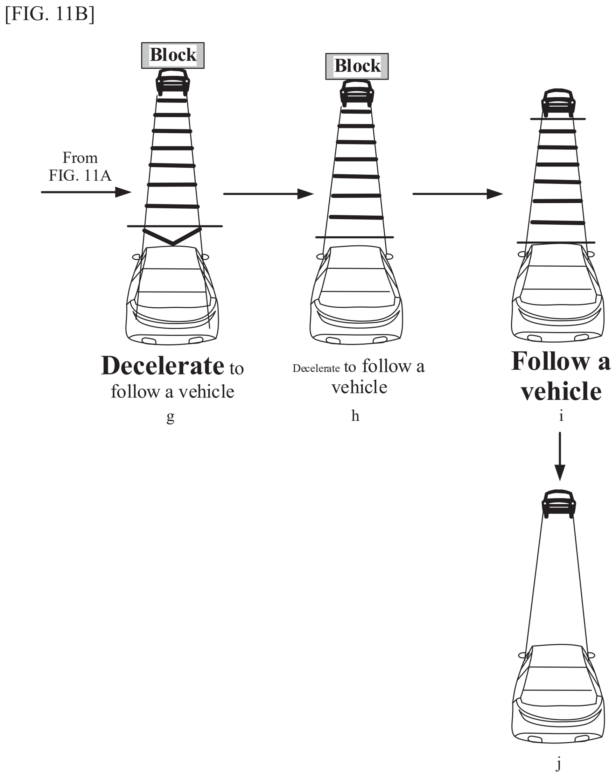

The following describes this solution with reference to a specific scenario. FIG. 11A and FIG. 11B show a scenario in which a preceding vehicle blocks a vehicle in front of the vehicle in a same lane. For example, environment information obtained by a CDC is blocking, and an orientation is front. Based on the environment information and a vehicle status, the CDC determines to decelerate significantly to follow the preceding vehicle. Based on the foregoing information, a presentation change process shown in Table 2 may be obtained.

**Table 2**

| | Blocking appears | Plan prompt | | | (Deceleration) Plan execution | | | | (Vehicle following) Plan execution | End of plan |
|---|---|---|---|---|---|---|---|---|---|---|
| Figure | a in FIG. 11A | b in FIG. 11A | c in FIG. 11A | d in FIG. 11A | e in FIG. 11A | f in FIG. 11A | g in FIG. 11B | h in FIG. 11B | i in FIG. 11B | j in FIG. 11B |
| Target component | | Display | | | | | | | Disappear | |
| Safety mark | | | Display a dynamic time-distance relationship, where a time distance gradually increases | | | | | | | Disapp ear |
| Speed mark | | | Displayed as a significant deceleration | | | | | | | Disapp ear |
| Driving behavior change start point/driving behavior change end point | | | Disp lay | | | | | | | Disapp ear |
| Text display | | Display "I will decelerate to follow a vehicle" | | | Display "Deceler ate to follow a vehicle" | | | Weaken "deceler ate" | "decelerate " disappears | Text disappe ars |

Specifically, as shown in a in FIG. 11A, a vehicle travels based on a navigation path of the ego vehicle. A preceding vehicle appears in front of the ego vehicle in a same lane. As shown in b in FIG. 11A, a target component "Block" shown in FIG. 9a is displayed, and a text "I will decelerate to follow a vehicle" is displayed. Based on an orientation corresponding to earliest change time in time corresponding to speed change information and time corresponding to direction change information of the vehicle, a driving behavior change start point 1101 and a driving behavior change end point 1102 shown in c in FIG. 11A and d in FIG. 11A are displayed on the navigation path, and a speed mark, a safety mark, and text display "I will decelerate to follow a vehicle" are displayed. In a process in which the vehicle performs a deceleration behavior, for example, as shown in e in FIG. 11A, f in FIG. 11A, and g in FIG. 11B, a text "Decelerate to follow a vehicle" is displayed, where "Decelerate" is highlighted. When the vehicle is about to end deceleration and enters a vehicle following state, as shown in h in FIG. 11B, "Decelerate" is displayed in a weakened manner in the text display. When the vehicle starts to enter a vehicle following phase, the text "Decelerate" disappears. As shown in i in FIG. 11B, a text "Follow a vehicle" is displayed, and the target component "Block" also disappears. After the vehicle enters the vehicle following phase, as the dynamic time distance gradually increases, the safety mark also disappears, and the text display "Follow a vehicle" also disappears, as shown in j in FIG. 11B.

For another example, FIG. 12 is a diagram of intention expression of a waiting-for-overtaking scenario according to an embodiment of this application. Another vehicle ahead that is in a same lane blocks an ego vehicle, and another vehicle also appears in an adjacent lane. Obtained environment information includes blocking and a direction being front, and the environment information further includes yielding and a direction being left. A driving decision is to wait for changing to a left lane to overtake the vehicle. Based on the environment information and a vehicle status, the ego vehicle determines to accelerate significantly. In this scenario, intention expression includes: a target component "Block" shown in FIG. 9a and a target component "Yield" shown in FIG. 9b. A safety mark is a circular arc, which represents a relative location relationship between the ego vehicle and the preceding vehicle. A speed mark is a significant acceleration. A waiting mark is a straight line. A text "Wait for changing to a left lane to overtake a vehicle" is displayed, where "Wait" is highlighted. Certainly, another mark or the like may be further included. This is not limited in this solution.

It should be noted that, in embodiments of this application, unless otherwise stated or there is a logic conflict, terms and/or descriptions between the embodiments are consistent and may be mutually referenced, and technical features in different embodiments may be combined into a new embodiment based on an internal logical relationship thereof.

The foregoing describes in detail the method in embodiments of this application, and the following provides an apparatus in embodiments of this application. It may be understood that, in the apparatus embodiments of this application, division into a plurality of units or modules is merely logical division based on functions, and is not intended to limit a specific structure of the apparatus. During specific implementation, some functional modules may be subdivided into more functional modules that are smaller, and some functional modules may also be combined into one functional module. However, regardless of whether these functional modules are subdivided or combined, a general procedure performed by the apparatus is the same. For example, some apparatuses include a receiving unit and a sending unit. In some designs, the sending unit and the receiving unit may alternatively be integrated into a communication unit, and the communication unit may implement functions implemented by the receiving unit and the sending unit. Usually, each unit corresponds to respective program code (or program instructions). When the program code corresponding to the unit is run on a processor, the unit is controlled by a processing unit to perform a corresponding procedure to implement a corresponding function.

An embodiment of this application further provides an apparatus for implementing any one of the foregoing methods. For example, a vehicle driving intention representation apparatus is provided, including modules (or means) configured to implement steps performed by a vehicle or a CDC in any one of the foregoing methods.

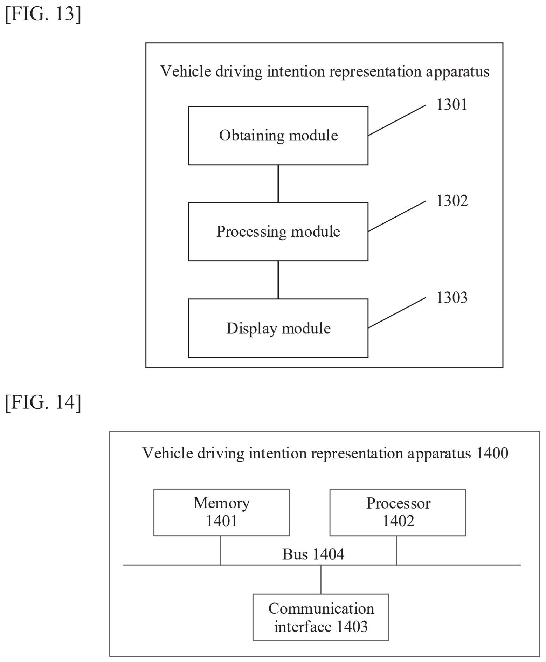

For example, FIG. 13 is a diagram of a structure of a vehicle driving intention representation apparatus according to an embodiment of this application. The vehicle driving intention representation apparatus is configured to implement the foregoing vehicle driving intention representation method, for example, the vehicle driving intention representation method shown in FIG. 2.

As shown in FIG. 13, the apparatus may include an obtaining module 1301, a processing module 1302, and a display module 1303, which are specifically as follows:

The obtaining module 1301 is configured to obtain environment information of the vehicle.

The processing module 1302 is configured to obtain intention information of a driving behavior of the vehicle based on the environment information and a vehicle status, where the intention information includes driving purpose information and vehicle control information, the driving purpose information represents a driving decision for the environment information, and the vehicle control information represents traveling information when the vehicle executes the driving decision.

The display module 1303 is configured to display a safety mark and a speed mark based on the driving purpose information and the vehicle control information, where the safety mark indicates safe traveling of the vehicle, and the speed mark indicates at least one of accelerated traveling and decelerated traveling of the vehicle.

In a possible implementation, an end point of the speed mark is related to a start point of the safety mark.

In a possible implementation, the safety mark includes a time distance mark, the time distance mark is N parallel short lines with an equal spacing between an obstacle and the vehicle, and N is an integer not less than 2.

In a possible implementation, the safety mark includes a mark of a relative location relationship between the obstacle and the vehicle, the relative location relationship mark is a short line or an arc between a navigation path of the vehicle and the obstacle, and the short line is parallel to a navigation direction of the vehicle.

In a possible implementation, the safety mark includes highlighting an intersection area on the navigation path.

In a possible implementation, the speed mark includes continuous fold lines or arcs; and a convex direction of the fold lines or arcs towards a direction of the vehicle indicates decelerated traveling of the vehicle, and a convex direction of the fold lines or arcs towards the navigation direction of the vehicle indicates accelerated traveling of the vehicle, where an angle of the fold lines or arcs indicates a change amplitude of the acceleration or deceleration.

In a possible implementation, the display module 1303 is further configured to:
display a driving behavior change start point and the driving behavior change end point based on the driving purpose information and the vehicle control information, where the driving behavior change start point indicates an orientation corresponding to earliest change time in time corresponding to speed change information and time corresponding to direction change information of the vehicle, and the driving behavior change end point indicates an orientation corresponding to latest change end time in time corresponding to the speed change information and time corresponding to the direction change information of the vehicle.

In a possible implementation, the display module 1303 is further configured to:
display one or more of a braking mark, a waiting mark, or a waiting countdown mark based on the driving purpose information and the vehicle control information, where the braking mark, the waiting mark, or the waiting countdown mark is at least one of a visual element perpendicular to a traveling direction, a visual element whose color deepens/lightens from left to right continuously and changes periodically, or a visual element that changes from large to small or from present to disappeared.

In a possible implementation, the display module 1303 is further configured to:
display a vehicle following status change mark based on the driving purpose information and the vehicle control information, where the vehicle following status change mark is that the navigation path changes from thin to thick or from thick to thin, the change from thin to thick indicates to decelerate to follow a preceding vehicle, and the change from thick to thin indicates to accelerate to follow a preceding vehicle.

In a possible implementation, the display module 1303 is further configured to:
display a target component, where the target component is a text and/or an icon, and the target component represents the environment information.

In a possible implementation, the display module 1303 is further configured to:
display first text content, where the first text content includes a first text and a second text, the first text indicates that a behavior corresponding to the vehicle control information is to be performed, and the second text indicates the behavior;
display second text content when the vehicle starts to perform the behavior, where the second text content includes the second text.

In a possible implementation, the display module 1303 is further configured to:
display first text content, where the first text content includes a first text, a second text, and a third text, the first text indicates that at least two consecutive behaviors corresponding to the vehicle control information are to be performed, the second text indicates a first behavior in the at least two consecutive behaviors, and the third text indicates a second behavior in the at least two consecutive behaviors;
display second text content when the vehicle starts to perform the first behavior, where the second text content includes the second text and the third text, and display strength of the second text is higher than that of the third text; and
display third text content when the vehicle starts to perform the second behavior, where the third text content includes the third text.

In a possible implementation, the display module 1303 is further configured to:
determine the first text, the second text, the third text, and display occasions of the first text, the second text, and the third text based on at least one of the driving decision, the vehicle status, and the vehicle control information.

In a possible implementation, the display module 1303 is further configured to:
display the driving behavior change start point and the driving behavior change end point on the navigation path, where the driving behavior change start point indicates the orientation corresponding to the earliest change time in the time corresponding to the speed change information and the time corresponding to the direction change information of the vehicle, and the driving behavior change end point indicates the orientation corresponding to the latest change end time in the time corresponding to the speed change information and the time corresponding to the direction change information of the vehicle;
display the continuous fold lines between the driving behavior change start point and the driving behavior change end point on the navigation path, where the convex direction of the fold lines towards the direction of the vehicle indicates decelerated traveling of the vehicle; and
display the time distance mark on a part that is on the navigation path and that is after the driving behavior change end point, where the time distance mark is the N parallel short lines with the equal spacing between the obstacle and the vehicle, and N is an integer not less than 2.

In a possible implementation, the display module 1303 is further configured to:
play a target voice, where the target voice is obtained based on the intention information.

It should be understood that division into the modules in the foregoing apparatuses is merely logical function division. During actual implementation, all or some of the modules may be integrated into one physical entity, or may be physically separated. In addition, the modules in the vehicle driving intention representation apparatus may be implemented in a form of software invoked by a processor. For example, the vehicle driving intention representation apparatus includes a processor, the processor is connected to a memory, the memory stores instructions, and the processor invokes the instructions stored in the memory, to implement any one of the foregoing methods or implement functions of each module of the apparatus. The processor is, for example, a general purpose processor, such as a central processing unit (central processing unit, CPU) or a microprocessor. The memory is a memory inside the apparatus or a memory outside the apparatus. Alternatively, the module in the apparatus may be implemented in a form of a hardware circuit, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between logic gate circuits, to implement functions of some or all of the foregoing units. All modules of the foregoing apparatuses may be implemented in a form of software invoked by a processor, or all modules may be implemented in a form of a hardware circuit, or some modules may be implemented in a form of software invoked by a processor, and a remaining part may be implemented in a form of a hardware circuit.

FIG. 14 is a diagram of a structure of another vehicle driving intention representation apparatus according to an embodiment of this application. The vehicle driving intention representation apparatus 1400 (the apparatus 1400 may be specifically a computer device) shown in FIG. 14 includes a memory 1401, a processor 1402, a communication interface 1403, and a bus 1404. The memory 1401, the processor 1402, and the communication interface 1403 are in communication connection to each other through the bus 1404.

The memory 1401 may be a read only memory (read only memory, ROM), a static storage device, a dynamic storage device, or a random access memory (random access memory, RAM).

The memory 1401 may store a program. When the program stored in the memory 1401 is executed by the processor 1402, the processor 1402 and the communication interface 1403 are configured to perform steps of the vehicle driving intention representation method in embodiments of this application.

The processor 1402 is a circuit having a signal processing capability. In an implementation, the processor 1402 may be a circuit having an instruction reading and running capability, for example, a central processing unit CPU, a microprocessor, a graphics processing unit (graphics processing unit, GPU) (which may be understood as a microprocessor), or a digital signal processor (digital signal processor, DSP). In another implementation, the processor 1402 may implement a specific function by using a logical relationship of a hardware circuit, and the logical relationship of the hardware circuit is fixed or reconfigurable. For example, the processor 1402 is a hardware circuit implemented by an ASIC or a programmable logic device PLD, for example, an FPGA. In a reconfigurable hardware circuit, a process in which the processor loads a configuration document to implement hardware circuit configuration may be understood as a process in which the processor loads instructions to implement functions of some or all of the foregoing modules. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). The processor 1402 is configured to execute a related program, to implement a function that needs to be performed by a unit in the vehicle driving intention representation apparatus in embodiments of this application, or perform the vehicle driving intention representation method in the method embodiments of this application.

It can be learned that each module in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the modules in the foregoing apparatus may be integrated, or may be independently implemented. In an implementation, the modules are integrated and implemented in a form of a system-on-a-chip (system-on-a-chip, SOC). The SOC may include at least one processor, configured to implement any one of the foregoing methods or implement functions of each module of the apparatus. Types of the at least one processor may be different, including, for example, a CPU and an FPGA, a CPU and an artificial intelligence processor, a CPU and a GPU, and the like.

The communication interface 1403 uses, for example, but not limited to, a transceiver-like apparatus, to implement communication between the apparatus 1400 and another device or a communication network. For example, data may be obtained through the communication interface 1403.

The bus 1404 may include a path for information transmission between various components (for example, the memory 1401, the processor 1402, and the communication interface 1403) of the apparatus 1400.

It should be noted that although the apparatus 1400 shown in FIG. 14 shows only the memory, the processor, and the communication interface, in a specific implementation process, a person skilled in the art should understand that the apparatus 1400 further includes another component necessary for normal operation. In addition, based on a specific requirement, a person skilled in the art should understand that the apparatus 1400 may further include a hardware component for implementing another additional function. In addition, a person skilled in the art should understand that the apparatus 1400 may alternatively include only a component required for implementing embodiments of this application, and does not need to include all components shown in FIG. 14.

An embodiment of this application further provides a computer-readable storage medium. The computer-readable storage medium stores instructions. When the instructions are run on a computer or a processor, the computer or the processor is enabled to perform one or more steps in any one of the foregoing methods.

An embodiment of this application further provides a computer program product including instructions. When the computer program product is run on a computer or a processor, the computer or the processor is enabled to perform one or more steps in any one of the foregoing methods.

It should be understood that unless otherwise specified, "/" in descriptions of this application indicates an "or" relationship between associated objects. For example, A/B may indicate A or B. A and B may be singular or plural. In addition, in the descriptions of this application, "a plurality of' means two or more than two unless otherwise specified. "At least one of the following items" or a similar expression thereof indicates any combination of the items, including one of the items or any combination of a plurality of the items. For example, at least one item (pieces) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that have basically the same functions or purposes. A person skilled in the art may understand that the words such as "first" and "second" limit neither of a quantity and an execution sequence, and the words such as "first" and "second" do not indicate a definite difference either. In addition, in embodiments of this application, terms such as "example" or "for example" are used to represent giving an example, an illustration, or a description. Any embodiment or design solution described as "example" or "for example" in embodiments of this application should not be construed as being more preferential or advantageous than other embodiments or design solutions. Exactly, use of the terms such as "example" or "for example" is intended to present a related concept in a specific manner for ease of understanding.

In the several embodiments provided in this application, it should be understood that the disclosed system, apparatus, and method may be implemented in other manners. For example, division into the units is merely logical function division and may be another division in actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented through software, hardware, firmware, or any combination thereof. When software is used to implement the embodiments, the embodiments may be implemented entirely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a read only memory (read only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state disk (solid-state disk, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A vehicle driving intention representation method, comprising:
obtaining environment information of the vehicle;
obtaining intention information of a driving behavior of the vehicle based on the environment information and a vehicle status, wherein the intention information comprises driving purpose information and vehicle control information, the driving purpose information represents a driving decision for the environment information, and the vehicle control information represents traveling information when the vehicle executes the driving decision; and
displaying a safety mark and a speed mark based on the driving purpose information and the vehicle control information, wherein the safety mark indicates safe traveling of the vehicle, and the speed mark indicates at least one of accelerated traveling and decelerated traveling of the vehicle.

2. The method according to claim 1, wherein an end point of the speed mark is related to a start point of the safety mark.

3. The method according to claim 1 or 2, wherein the safety mark comprises a time distance mark, the time distance mark is N parallel short lines with an equal spacing between an obstacle and the vehicle, and N is an integer not less than 2.

4. The method according to any one of claims 1 to 3, wherein the safety mark comprises a mark of a relative location relationship between the obstacle and the vehicle, the relative location relationship mark is a short line or an arc between a navigation path of the vehicle and the obstacle, and the short line is parallel to a navigation direction of the vehicle.

5. The method according to any one of claims 1 to 4, wherein the safety mark comprises highlighting an intersection area on the navigation path.

6. The method according to any one of claims 1 to 5, wherein the speed mark comprises continuous fold lines or arcs; and a convex direction of the fold lines or arcs towards a direction of the vehicle indicates decelerated traveling of the vehicle, and a convex direction of the fold lines or arcs towards the navigation direction of the vehicle indicates accelerated traveling of the vehicle, wherein an angle of the fold lines or arcs indicates a change amplitude of the acceleration or deceleration.

7. The method according to any one of claims 1 to 6, wherein the method further comprises:
displaying a driving behavior change start point and the driving behavior change end point based on the driving purpose information and the vehicle control information, wherein the driving behavior change start point indicates an orientation corresponding to earliest change time in time corresponding to speed change information and time corresponding to direction change information of the vehicle, and the driving behavior change end point indicates an orientation corresponding to latest change end time in time corresponding to the speed change information and time corresponding to the direction change information of the vehicle.

8. The method according to any one of claims 1 to 7, wherein the method further comprises:
displaying one or more of a braking mark, a waiting mark, or a waiting countdown mark based on the driving purpose information and the vehicle control information,
wherein the braking mark, the waiting mark, or the waiting countdown mark is at least one of a visual element perpendicular to a traveling direction, a visual element whose color deepens/lightens from left to right continuously and changes periodically, or a visual element that changes from large to small or from present to disappeared.

9. The method according to any one of claims 1 to 8, wherein the method further comprises:
displaying a vehicle following status change mark based on the driving purpose information and the vehicle control information, wherein the vehicle following status change mark is that the navigation path changes from thin to thick or from thick to thin, the change from thin to thick indicates to decelerate to follow a preceding vehicle, and the change from thick to thin indicates to accelerate to follow a preceding vehicle.

10. The method according to any one of claims 1 to 9, wherein the method further comprises:
displaying a target component, wherein the target component is a text and/or an icon, and the target component represents the environment information.

11. The method according to any one of claims 1 to 10, wherein the method further comprises:
displaying first text content, wherein the first text content comprises a first text and
a second text, the first text indicates that a behavior corresponding to the vehicle control information is to be performed, and the second text indicates the behavior;
and
displaying second text content when the vehicle starts to perform the behavior,
wherein the second text content comprises the second text.

12. The method according to any one of claims 1 to 10, wherein the method further comprises:
displaying first text content, wherein the first text content comprises a first text, a second text, and a third text, the first text indicates that at least two consecutive behaviors corresponding to the vehicle control information are to be performed, the second text indicates a first behavior in the at least two consecutive behaviors, and the third text indicates a second behavior in the at least two consecutive behaviors;
displaying second text content when the vehicle starts to perform the first behavior, wherein the second text content comprises the second text and the third text, and display strength of the second text is higher than that of the third text; and
displaying third text content when the vehicle starts to perform the second behavior, wherein the third text content comprises the third text.

13. The method according to claim 12, wherein the method further comprises:
determining the first text, the second text, the third text, and display occasions of the first text, the second text, and the third text based on at least one of the driving decision, the vehicle status, and the vehicle control information.

14. The method according to any one of claims 1 to 13, wherein displaying the safety mark and the speed mark based on the driving purpose information and the vehicle control information comprises:
displaying the driving behavior change start point and the driving behavior change end point on the navigation path, wherein the driving behavior change start point indicates the orientation corresponding to the earliest change time in the time corresponding to the speed change information and the time corresponding to the direction change information of the vehicle, and the driving behavior change end point indicates the orientation corresponding to the latest change end time in the time corresponding to the speed change information and the time corresponding to the direction change information of the vehicle;
displaying the continuous fold lines between the driving behavior change start point and the driving behavior change end point on the navigation path, wherein the convex direction of the fold lines towards the direction of the vehicle indicates decelerated traveling of the vehicle; and
displaying the time distance mark on a part that is on the navigation path and that is after the driving behavior change end point, wherein the time distance mark is the N parallel short lines with the equal spacing between the obstacle and the vehicle, and N is an integer not less than 2.

15. The method according to any one of claims 1 to 14, wherein the method further comprises:
playing a target voice, wherein the target voice is obtained based on the intention information.

16. A vehicle driving intention representation apparatus, comprising:
an obtaining module, configured to obtain environment information of the vehicle;
a processing module, configured to obtain intention information of a driving behavior of the vehicle based on the environment information and a vehicle status,
wherein the intention information comprises driving purpose information and vehicle control information, the driving purpose information represents a driving decision for the environment information, and the vehicle control information represents traveling information when the vehicle executes the driving decision; and
a display module, configured to display a safety mark and a speed mark based on the driving purpose information and the vehicle control information, wherein the safety mark indicates safe traveling of the vehicle, and the speed mark indicates at least one of accelerated traveling and decelerated traveling of the vehicle.

17. The apparatus according to claim 16, wherein an end point of the speed mark is related to a start point of the safety mark.

18. The apparatus according to claim 16 or 17, wherein the safety mark comprises a time distance mark, the time distance mark is N parallel short lines with an equal spacing between an obstacle and the vehicle, and N is an integer not less than 2.

19. The apparatus according to any one of claims 16 to 18, wherein the safety mark comprises a mark of a relative location relationship between the obstacle and the vehicle, the relative location relationship mark is a short line or an arc between a navigation path of the vehicle and the obstacle, and the short line is parallel to a navigation direction of the vehicle.

20. The apparatus according to any one of claims 16 to 19, wherein the safety mark comprises highlighting an intersection area on the navigation path.

21. The apparatus according to any one of claims 16 to 20, wherein the speed mark comprises continuous fold lines or arcs; and a convex direction of the fold lines or arcs towards a direction of the vehicle indicates decelerated traveling of the vehicle, and a convex direction of the fold lines or arcs towards the navigation direction of the vehicle indicates accelerated traveling of the vehicle, wherein an angle of the fold lines or arcs indicates a change amplitude of the acceleration or deceleration.

22. The apparatus according to any one of claims 16 to 21, wherein the display module is further configured to:
display a driving behavior change start point and the driving behavior change end point based on the driving purpose information and the vehicle control information,
wherein the driving behavior change start point indicates an orientation corresponding to earliest change time in time corresponding to speed change information and time corresponding to direction change information of the vehicle,
and the driving behavior change end point indicates an orientation corresponding to latest change end time in time corresponding to the speed change information and time corresponding to the direction change information of the vehicle.

23. The apparatus according to any one of claims 16 to 22, wherein the display module is further configured to:
display one or more of a braking mark, a waiting mark, or a waiting countdown mark based on the driving purpose information and the vehicle control information,
wherein the braking mark, the waiting mark, or the waiting countdown mark is at least one of a visual element perpendicular to a traveling direction, a visual element whose color deepens/lightens from left to right continuously and changes periodically, or a visual element that changes from large to small or from present to disappeared.

24. The apparatus according to any one of claims 16 to 23, wherein the display module is further configured to:
display a vehicle following status change mark based on the driving purpose information and the vehicle control information, wherein the vehicle following status change mark is that the navigation path changes from thin to thick or from thick to thin, the change from thin to thick indicates to decelerate to follow a preceding vehicle, and the change from thick to thin indicates to accelerate to follow a preceding vehicle.

25. The apparatus according to any one of claims 16 to 24, wherein the display module is further configured to:
display a target component, wherein the target component is a text and/or an icon, and the target component represents the environment information.

26. The apparatus according to any one of claims 16 to 25, wherein the display module is further configured to:
display first text content, wherein the first text content comprises a first text and a second text, the first text indicates that a behavior corresponding to the vehicle control information is to be performed, and the second text indicates the behavior; and
display second text content when the vehicle starts to perform the behavior, wherein the second text content comprises the second text.

27. The apparatus according to any one of claims 16 to 25, wherein the display module is further configured to:
display first text content, wherein the first text content comprises a first text, a second text, and a third text, the first text indicates that at least two consecutive behaviors corresponding to the vehicle control information are to be performed, the second text indicates a first behavior in the at least two consecutive behaviors, and the third text indicates a second behavior in the at least two consecutive behaviors;
display second text content when the vehicle starts to perform the first behavior, wherein the second text content comprises the second text and the third text, and display strength of the second text is higher than that of the third text; and
display third text content when the vehicle starts to perform the second behavior, wherein the third text content comprises the third text.

28. The apparatus according to claim 27, wherein the display module is further configured to:
determine the first text, the second text, the third text, and display occasions of the first text, the second text, and the third text based on at least one of the driving decision, the vehicle status, and the vehicle control information.

29. The apparatus according to any one of claims 16 to 28, wherein the display module is further configured to:
display the driving behavior change start point and the driving behavior change end point on the navigation path, wherein the driving behavior change start point indicates the orientation corresponding to the earliest change time in the time corresponding to the speed change information and the time corresponding to the direction change information of the vehicle, and the driving behavior change end point indicates the orientation corresponding to the latest change end time in the time corresponding to the speed change information and the time corresponding to the direction change information of the vehicle;
display the continuous fold lines between the driving behavior change start point and the driving behavior change end point on the navigation path, wherein the convex direction of the fold lines towards the direction of the vehicle indicates decelerated traveling of the vehicle; and
display the time distance mark on a part that is on the navigation path and that is after the driving behavior change end point, wherein the time distance mark is the N parallel short lines with the equal spacing between the obstacle and the vehicle, and N is an integer not less than 2.

30. The apparatus according to any one of claims 16 to 29, wherein the display module is further configured to:
play a target voice, wherein the target voice is obtained based on the intention information.

31. A vehicle driving intention representation apparatus, comprising at least one processor and a memory, wherein the at least one processor executes a program or instructions stored in the memory, to enable the vehicle driving intention representation apparatus to implement the method according to any one of claims 1 to 15.

32. A computer-readable storage medium, configured to store a computer program, wherein when the computer program is run on a computer or a processor, the computer or the processor is enabled to implement the method according to any one of claims 1 to 15.

33. A computer program product, wherein the computer program product comprises instructions, and when the instructions are run on a computer or a processor, the computer or the processor is enabled to implement the method according to any one of claims 1 to 15.

34. A chip, comprising at least one processor and a memory, wherein the at least one processor executes a program or instructions stored in the memory, to implement the method according to any one of claims 1 to 15.

35. A vehicle, wherein the vehicle comprises the vehicle driving intention representation apparatus according to any one of claims 16 to 30.
